# EUROPEAN PATENT APPLICATION

(11) **EP 4 395 306 A1**
(43) Date of publication of application: **03.07.2024**
(21) Application number: 23778020.0
(22) Date of filing: 23.03.2023
(51) Int. Cl.: H04N 7/14

(54) **COMMUNICATION METHOD, APPARATUS, AND SYSTEM**

(30) Priority: 31.03.2022 CN 202210344479
(71) Applicant: Huawei Technologies Co., Ltd., Shenzhen, Guangdong 518129 (CN)
(72) Inventor: XU, Changyue, Shenzhen, Guangdong 518129 (CN); FENG, Junhui, Shenzhen, Guangdong 518129 (CN); ZHANG, Chunhe, Shenzhen, Guangdong 518129 (CN); ZHUANG, Naifeng, Shenzhen, Guangdong 518129 (CN); WANG, Kun, Shenzhen, Guangdong 518129 (CN)
(74) Representative: Gill Jennings & Every LLP
(86) International application number: PCT/CN2023/083492
(87) International publication number: WO 2023/185651

(57) **Abstract**

A communication method, an apparatus, and a system are provided and relate to the field of communication technologies, to perform whiteboard interaction during a call. A call terminal transmits a call video stream between the call terminal and a peer call terminal through an established video call media transmission channel; detects a first touch operation of a first user on a first whiteboard picture presented on a call interface, and generates first touch trace data used to describe a first touch trace generated by the first touch operation; sends the first touch trace data to a media server; receives second whiteboard media data from the media server through the video call media transmission channel, and presents, on the call interface based on the second whiteboard media data, a second whiteboard picture including the first touch trace and a second touch trace, where the second touch trace is a touch trace generated by performing, by a second user, a second touch operation on a whiteboard picture presented on a call interface of the peer call terminal.

## Description

This application claims priority to Chinese Patent Application No. 202210344479.5, filed with the China National Intellectual Property Administration on March 31, 2022 and entitled "COMMUNICATION METHOD, APPARATUS, AND SYSTEM", which is incorporated herein by reference in its entirety.

### TECHNICAL FIELD

Embodiments of this application relate to the field of communication technologies, and in particular, to a communication method, an apparatus, and a system.

### BACKGROUND

In existing scenarios such as a two-party call and a multi-party conference (for example, a multi-party video conference), communication efficiency still needs to be improved. If a call participant can interact with a peer party via a virtualized whiteboard, like face-to-face communication, each call participant may perform operations such as writing and drawing on a same whiteboard. In this way, communication means other than voice and video means are added, and communication can be more convenient and effective.

How to superimpose a whiteboard interaction function based on an existing call function is a technical problem that needs to be resolved.

### SUMMARY

Embodiments of this application provide a communication method, an apparatus, and a system, to add a whiteboard interaction function based on an existing call function.

To achieve the foregoing objective, the following technical solutions are used in embodiments of this application.

According to a first aspect, an embodiment of this application provides a communication method. The method is performed by a call terminal. The method includes: establishing a video call media transmission channel between the call terminal and a media server, and transmitting a call video stream between the call terminal and a peer call terminal through the video call media transmission channel, to implement a video call service between the call terminal and the peer call terminal, where the call video stream includes video content shot by the call terminal or the peer call terminal; presenting a first whiteboard picture on a call interface based on first whiteboard media data, where the first whiteboard picture is a blank picture; detecting a first touch operation of a first user on the first whiteboard picture, and generating first touch trace data, where the first touch trace data is used to describe a first touch trace generated by the first touch operation; sending the first touch trace data to the media server; and receiving second whiteboard media data from the media server through the video call media transmission channel, and presenting a second whiteboard picture on the call interface based on the second whiteboard media data, where the second whiteboard picture includes the first touch trace and a second touch trace, and the second touch trace is a touch trace generated by performing, by a second user, a second touch operation on a whiteboard picture that is presented on a call interface of the peer call terminal and that corresponds to the first whiteboard picture.

According to the technical solution provided in this embodiment of this application, the call terminal may send whiteboard media data (for example, the foregoing second whiteboard media data) of the call terminal based on an existing video call media transmission channel, without spending extra time to establish a transmission channel dedicated to transmitting the whiteboard media data, and without occupying additional port resources of the terminals (including the call terminal and the peer call terminal). In this way, time and port resources of the terminals that are occupied during whiteboard interaction in a call process can be reduced.

Further, in comparison with an existing communication method, in the technical solution provided in this embodiment of this application, no whiteboard APP needs to be installed on a user call terminal and a customer service call terminal. In this way, an operator does not need to perform a complex related operation, and the operator does not need to have high operation skills.

In a possible implementation, a form of the first touch operation performed by the first user on the first whiteboard picture is not limited in this embodiment of this application. For example, the touch operation may be a tap operation on the first whiteboard picture, or may be a slide operation, such as writing or drawing, on the first whiteboard picture. After the first user performs the touch operation on the first whiteboard picture, a touch trace corresponding to a specific behavior of the touch operation may be formed. For example, if the touch operation is drawing a circle, the touch trace is a circle track. The first touch trace data includes but is not limited to a timestamp, a color, a shape, a location (for example, a location parameter such as coordinates of points on the touch trace), and the like that may indicate the touch trace. For example, a touch trace on a whiteboard picture is a red circle. The first touch trace data includes data indicating the whiteboard picture (for example, a timestamp or identification information of the whiteboard picture), data indicating that a color of the touch trace is red, data indicating that a shape of the touch trace is the circle, and data indicating center coordinates and a radius of the touch trace.

In a possible implementation, the first whiteboard media data includes data corresponding to a first video frame, and the first video frame is received from the media server through the video call media transmission channel and is used to present the blank picture; and the presenting a first whiteboard picture on a call interface based on first whiteboard media data includes: decoding the data corresponding to the first video frame to present the first whiteboard picture on the call interface.

Alternatively, in a possible implementation, the first whiteboard media data includes data corresponding to a whiteboard image, and the whiteboard image is locally stored in the call terminal and is used to present the blank picture; and the presenting a first whiteboard picture based on first whiteboard media data includes: decoding the data corresponding to the whiteboard image to present the first whiteboard picture on the call interface.

In a possible implementation, the second whiteboard media data includes data corresponding to a second video frame, and the second video frame is used to present a second whiteboard picture into which the first touch trace and the second touch trace are embedded; and the presenting a second whiteboard picture on the call interface based on the second whiteboard media data includes: decoding the data corresponding to the second video frame to present the second whiteboard picture on the call interface.

Alternatively, in a possible implementation, the second whiteboard media data is second touch trace data, and the second touch trace data is used to describe the second touch trace; and the presenting a second whiteboard picture on the call interface based on the second whiteboard media data includes: presenting the first touch trace and the second touch trace on the call interface in a superimposition manner based on the first touch trace data and the second touch trace data, to form the second whiteboard picture.

In this embodiment of this application, in this way, the first user corresponding to the call terminal can see the touch traces of the first user and the second user on the first whiteboard picture, so that the first user and the second user can effectively interact with each other based on a whiteboard.

In a possible implementation, the communication method provided in this embodiment of this application further includes: receiving transmission channel indication information from the media server, where the transmission channel indication information indicates the call terminal to receive the second whiteboard media data through the video call media transmission channel, so that the whiteboard media data (for example, the second whiteboard media data) may be transmitted through the video call media transmission channel.

In this embodiment of this application, an explicit indication method (to be specific, sending the transmission channel indication information) may be used to indicate to transmit the whiteboard media data through the video call media transmission channel. In some cases, the media server may alternatively indicate, by using an implicit indication method, to transmit the whiteboard media data through the video call media transmission channel.

In a possible implementation, the communication method provided in this embodiment of this application further includes: stopping transmitting the call video stream through the video call media transmission channel.

In a possible implementation, the communication method provided in this embodiment of this application further includes: sending a whiteboard interaction application to the media server, where the whiteboard interaction application includes an identifier of the peer call terminal, and the identifier is used to apply for whiteboard interaction with the peer call terminal, to present the second whiteboard picture on the call terminal. It may be understood that there may be a plurality of peer call terminals that communicate with the call terminal, and in a process of communicating with the plurality of peer call terminals, the call terminal may apply for whiteboard interaction with one peer call terminal.

In a possible implementation, the communication method provided in this embodiment of this application further includes: determining that the call terminal has a resource required for whiteboard interaction.

In this embodiment of this application, before the call terminal performs the first touch operation on the whiteboard picture, the media server interacts with the call terminal to determine that the call terminal has the resource required for whiteboard interaction. After the call terminal sends the whiteboard interaction application, a status of the call terminal may change. For example, a current network signal of the call terminal may be poor, or the call terminal is in a 2G/3G network, and bandwidth of the call terminal is insufficient to support the call terminal in performing the first touch operation on the first whiteboard picture; the video call media transmission channel is unavailable; or the user corresponding to the call terminal is inconvenient to perform a touch operation. In these cases, the call terminal does not have the resource required for whiteboard interaction.

In a possible implementation, the determining that the call terminal has a resource required for whiteboard interaction includes: receiving a SIP message from the media server, where the SIP message includes a touch operation determining identifier, and the touch operation determining identifier is used to determine whether the call terminal has the resource required for whiteboard interaction; and sending a response message for the SIP message to the media server, where the response message includes a touch operation answer identifier, and the touch operation answer identifier indicates that the call terminal has the resource required for whiteboard interaction.

The touch operation determining identifier in the SIP message may be carried in a header field of the SIP message. Alternatively, when the SIP message includes SDP information of the media server, the touch operation determining identifier may alternatively be carried in the SDP information of the media server.

According to a second aspect, an embodiment of this application provides a communication method. The method is performed by a media server. The method includes: establishing a first video call media transmission channel and a second video call media transmission channel, where the first video call media transmission channel is a video call media transmission channel between a call terminal and the media server, and the second video call media transmission channel is a video call media transmission channel between the media server and a peer call terminal; and transmitting a call video stream between the call terminal and the peer call terminal through the first video call media transmission channel and the second video call media transmission channel, where the call video stream includes video content shot by the call terminal or the peer call terminal; receiving a whiteboard interaction application from the call terminal, where the whiteboard interaction application includes an identifier of the peer call terminal, and the identifier is used to apply for whiteboard interaction with the peer call terminal, to present a whiteboard picture including a touch trace of the call terminal and/or a touch trace of the peer call terminal on a call interface of the call terminal and a call interface of the peer call terminal; receiving first touch trace data from the call terminal, where the first touch trace data is touch trace data generated by performing, by a first user, a first touch operation on a first whiteboard picture presented on the call terminal, the first touch trace data is data generated by performing, by the first user, the first touch operation on the first whiteboard picture presented on the call interface of the call terminal, the first whiteboard picture is a blank picture, the first whiteboard picture is a whiteboard picture presented based on first whiteboard media data, and the first touch trace data is used to describe a first touch trace generated by the first touch operation; receiving second touch trace data from the peer call terminal, where the second touch trace data is data generated by performing, by a second user, a second touch operation on a whiteboard picture that is presented on the call interface of the peer call terminal and that corresponds to the first whiteboard picture, and the second touch trace data is used to describe a second touch trace generated by the second touch operation; sending second whiteboard media data to the call terminal through the first video call media transmission channel, to present a second whiteboard picture on the call interface of the call terminal, where the second whiteboard picture includes the touch trace corresponding to the first touch trace data and the touch trace corresponding to the second touch trace data; sending third whiteboard media data to the peer call terminal through the second video call media transmission channel, to present the second whiteboard picture on the call interface of the peer call terminal.

According to the technical solution provided in this embodiment of this application, the media server may transmit whiteboard media data (for example, the second whiteboard media data and the third whiteboard media data) based on an existing video call media transmission channel, without spending extra time to establish a transmission channel dedicated to transmitting the whiteboard media data, and without occupying additional port resources of the terminals (including the call terminal and the peer call terminal). In this way, port resources occupied during whiteboard interaction in a call process can be reduced.

Further, in comparison with an existing communication method, in the technical solution provided in this embodiment of this application, no whiteboard APP needs to be installed on a user call terminal and a customer service call terminal. In this way, an operator does not need to perform a complex related operation, and the operator does not need to have high operation skills.

In a possible implementation, the first whiteboard media data includes data corresponding to a first video frame, and the first video frame is received from the media server through the first video call media transmission channel and is used to present the blank picture.

Alternatively, in a possible implementation, the first whiteboard media data includes data corresponding to a whiteboard image, and the whiteboard image is locally stored in the call terminal and is used to present the blank picture.

In a possible implementation, the second whiteboard media data is the same as the third whiteboard media data, the second whiteboard media data or the third whiteboard media data includes data corresponding to a second video frame, and the second video frame is used to present a second whiteboard picture into which the first touch trace and the second touch trace are embedded.

In a possible implementation, the second whiteboard media data is different from the third whiteboard media data, the second whiteboard media data is the second touch trace data, and the third whiteboard media data is the first touch trace data.

In a possible implementation, the communication method provided in this embodiment of this application further includes: sending first transmission channel indication information to the call terminal, where the first transmission channel indication information indicates the call terminal to receive the second whiteboard media data through the first video call media channel.

In a possible implementation, the communication method provided in this embodiment of this application further includes: sending second transmission channel indication information to the peer call terminal, where the second transmission channel indication information indicates the peer call terminal to receive the third whiteboard media data through the second video call media channel.

In a possible implementation, the communication method provided in this embodiment of this application further includes: stopping transmitting the call video stream through the first video call media transmission channel.

In a possible implementation, the communication method provided in this embodiment of this application further includes: stopping transmitting the call video stream through the second video call media transmission channel.

In a possible implementation, the communication method provided in this embodiment of this application further includes: determining that the call terminal has a resource required for whiteboard interaction.

In a possible implementation, the communication method provided in this embodiment of this application further includes: determining that the peer call terminal has a resource required for performing the second touch operation on the whiteboard picture corresponding to the first whiteboard picture.

In a possible implementation, the determining that the call terminal has a resource required for whiteboard interaction includes: sending a SIP message to the call terminal, where the SIP message includes a touch operation determining identifier, and the touch operation determining identifier is used to determine whether the call terminal has the resource required for whiteboard interaction; receive a response message for the SIP message from the call terminal, where the response message includes a touch operation answer identifier, and the touch operation answer identifier indicates that the call terminal has the resource required for whiteboard interaction.

In a possible implementation, the communication method provided in this embodiment of this application further includes: sending a whiteboard interaction request to the peer call terminal, where the whiteboard interaction request is used to request the peer call terminal to perform whiteboard interaction with the call terminal; and receiving a response message for the whiteboard interaction request from the peer call terminal, where the response message indicates that the second user agrees to perform whiteboard interaction with the first user.

For related content and technical effects of the second aspect, refer to the content and the technical effects in any one of the first aspect and the possible implementations of the first aspect.

According to a third aspect, an embodiment of this application provides a call terminal, including a processing module, a generation module, a sending module, and a receiving module. The processing module is configured to: establish a video call media transmission channel between the call terminal and a media server, and transmit a call video stream between the call terminal and a peer call terminal through the video call media transmission channel, to implement a video call service between the call terminal and the peer call terminal; and present a first whiteboard picture on a call interface based on first whiteboard media data, where the first whiteboard picture is a blank picture. The generation module is configured to: detect a first touch operation of a first user on the first whiteboard picture, and generate first touch trace data, where the first touch trace data is used to describe a first touch trace generated by the first touch operation. The sending module is configured to send the first touch trace data to the media server. The receiving module is configured to receive second whiteboard media data from the media server through the video call media transmission channel. The processing module is further configured to present a second whiteboard picture on the call interface based on the second whiteboard media data, where the second whiteboard picture includes the first touch trace and a second touch trace, and the second touch trace is a touch trace generated by performing, by a second user, a second touch operation on a whiteboard picture that is presented on a call interface of the peer call terminal and that corresponds to the first whiteboard picture.

In a possible implementation, the first whiteboard media data includes data corresponding to a first video frame, and the first video frame is received from the media server through the video call media transmission channel and is used to present the blank picture; and the processing module is specifically configured to decode the data corresponding to the first video frame to present the first whiteboard picture on the call interface.

Alternatively, in a possible implementation, the first whiteboard media data includes data corresponding to a whiteboard image, and the whiteboard image is locally stored in the call terminal and is used to present the blank picture; and the processing module is specifically configured to decode the data corresponding to the whiteboard image to present the first whiteboard picture on the call interface.

In a possible implementation, the second whiteboard media data includes data corresponding to a second video frame, and the second video frame is used to present the second whiteboard picture into which the first touch trace and the second touch trace are embedded; and the processing module is specifically configured to decode the data corresponding to the second video frame to present the second whiteboard picture on the call interface.

Alternatively, in a possible implementation, the second whiteboard media data is second touch trace data, and the second touch trace data is used to describe the second touch trace; and the processing module is specifically configured to present the first touch trace and the second touch trace on the call interface in a superimposition manner based on the first touch trace data and the second touch trace data, to form the second whiteboard picture.

In a possible implementation, the receiving module is further configured to receive transmission channel indication information from the media server, where the transmission channel indication information indicates the call terminal to receive the second whiteboard media data through the video call media transmission channel.

In a possible implementation, the processing module is further configured to control the call terminal to stop transmitting the call video stream through the video call media transmission channel.

In a possible implementation, the sending module is further configured to send a whiteboard interaction application to the media server, where the whiteboard interaction application includes an identifier of the peer call terminal, and the identifier is used to apply for whiteboard interaction with the peer call terminal, to present the second whiteboard picture on the call terminal.

In a possible implementation, the receiving module is further configured to receive a session initiation protocol SIP message from the media server, where the SIP message includes a touch operation determining identifier, and the touch operation determining identifier is used to determine whether the call terminal has a resource required for whiteboard interaction; and the sending module is further configured to send a response message for the SIP message to the media server, where the response message includes a touch operation answer identifier, and the touch operation answer identifier indicates that the call terminal has the resource required for whiteboard interaction.

According to a fourth aspect, an embodiment of this application provides a media server, including a processing module, a receiving module, and a sending module. The processing module is configured to: establish a first video call media transmission channel and a second video call media transmission channel, where the first video call media transmission channel is a video call media transmission channel between a call terminal and the media server, and the second video call media transmission channel is a video call media transmission channel between the media server and a peer call terminal; and transmit a call video stream between the call terminal and the peer call terminal through the first video call media transmission channel and the second video call media transmission channel, to implement a video call service between the call terminal and the peer call terminal. The receiving module is configured to: receive first touch trace data from the call terminal, where the first touch trace data is data generated by performing, by a first user, a first touch operation on a first whiteboard picture presented on a call interface of the call terminal, the first whiteboard picture is a blank picture, the first whiteboard picture is a whiteboard picture presented based on first whiteboard media data, and the first touch trace data is used to describe a first touch trace generated by the first touch operation; and receive second touch trace data from the peer call terminal, where the second touch trace data is data generated by performing, by a second user, a second touch operation on a whiteboard picture that is presented on a call interface of the peer call terminal and that corresponds to the first whiteboard picture, and the second touch trace data is used to describe a second touch trace generated by the second touch operation. The sending module is configured to: send second whiteboard media data to the call terminal through the first video call media transmission channel, to present a second whiteboard picture on the call interface of the call terminal, where the second whiteboard picture includes the first touch trace and the second touch trace; and send third whiteboard media data to the peer call terminal through the second video call media transmission channel, to present the second whiteboard picture on the call interface of the peer call terminal.

In a possible implementation, the first whiteboard media data includes data corresponding to a first video frame, and the first video frame is received from the media server through the first video call media transmission channel and is used to present the blank picture.

Alternatively, in a possible implementation, the first whiteboard media data includes data corresponding to a whiteboard image, and the whiteboard image is locally stored in the call terminal and is used to present the blank picture.

In a possible implementation, the second whiteboard media data is the same as the third whiteboard media data, the second whiteboard media data or the third whiteboard media data includes data corresponding to a second video frame, and the second video frame is used to present a second whiteboard picture into which the first touch trace and the second touch trace are embedded.

In a possible implementation, the second whiteboard media data is different from the third whiteboard media data, the second whiteboard media data is the second touch trace data, and the third whiteboard media data is the first touch trace data.

In a possible implementation, the sending module is further configured to: send first transmission channel indication information to the call terminal, where the first transmission channel indication information indicates the call terminal to receive the second whiteboard media data through the first video call media channel; and send second transmission channel indication information to the peer call terminal, where the second transmission channel indication information indicates the peer call terminal to receive the third whiteboard media data through the second video call media channel.

In a possible implementation, the processing module is further configured to: control the media server to stop transmitting the call video stream through the first video call media transmission channel; and control the media server to stop transmitting the call video stream through the second video call media transmission channel.

In a possible implementation, the sending module is further configured to send a session initiation protocol SIP message to the call terminal, where the SIP message includes a touch operation determining identifier, and the touch operation determining identifier is used to determine whether the call terminal has a resource required for whiteboard interaction; and the receiving module is further configured to receive a response message for the SIP message from the call terminal, where the response message includes a touch operation answer identifier, and the touch operation answer identifier indicates that the call terminal has the resource required for whiteboard interaction.

In a possible implementation, the receiving module is further configured to receive a whiteboard interaction application from the call terminal, where the whiteboard interaction application includes an identifier of the peer call terminal, and the identifier is used to apply for whiteboard interaction with the peer call terminal, to present a whiteboard picture including a touch trace of the call terminal and/or a touch trace of the peer call terminal on the call interface of the call terminal and the call interface of the peer call terminal; the sending module is further configured to send a whiteboard interaction request to the peer call terminal, where the whiteboard interaction request is used to request the peer call terminal to perform whiteboard interaction with the call terminal; and the receiving module is further configured to receive a response message for the whiteboard interaction request from the peer call terminal, where the response message indicates that the second user agrees to perform whiteboard interaction with the first user.

According to a fifth aspect, an embodiment of this application provides a call terminal, including a memory and at least one processor connected to the memory. The memory is configured to store computer program code, and the computer program code includes computer instructions. When the computer instructions are executed by the at least one processor, the call terminal is enabled to perform the method according to any one of the first aspect and the possible implementations of the first aspect.

According to a sixth aspect, an embodiment of this application provides a media server, including a memory and at least one processor connected to the memory. The memory is configured to store computer program code, and the computer program code includes computer instructions. When the computer instructions are executed by the at least one processor, the media server is enabled to perform the method according to any one of the second aspect and the possible implementations of the second aspect.

According to a seventh aspect, an embodiment of this application provides a computer-readable storage medium, including computer instructions. When the computer instructions are run on a call terminal, the call terminal is enabled to perform the method according to any one of the first aspect and the possible implementations of the first aspect.

According to an eighth aspect, an embodiment of this application provides a computer-readable storage medium, including computer instructions. When the computer instructions are run on a media server, the media server is enabled to perform the method according to any one of the second aspect and the possible implementations of the second aspect.

According to a ninth aspect, an embodiment of this application provides a computer program product. When the computer program product runs on a computer, the method according to any one of the first aspect and the possible implementations of the first aspect is performed.

According to a tenth aspect, an embodiment of this application provides a computer program product. When the computer program product runs on a computer, the method according to any one of the second aspect and the possible implementations of the second aspect is performed.

According to an eleventh aspect, an embodiment of this application provides a chip, including a memory and a processor. The memory is configured to store computer instructions. The processor is configured to invoke the computer instructions from the memory and run the computer instructions, to enable a call terminal to perform the method according to any one of the first aspect and the possible implementations of the first aspect.

According to a twelfth aspect, an embodiment of this application provides a chip, including a memory and a processor. The memory is configured to store computer instructions. The processor is configured to invoke the computer instructions from the memory and run the computer instructions, to enable a media server to perform the method according to any one of the second aspect and the possible implementations of the second aspect.

According to a thirteenth aspect, an embodiment of this application provides a communication system, including a call terminal and a media server. The call terminal performs the method according to any one of the first aspect and the possible implementations of the first aspect, and the media server performs the method according to any one of the second aspect and the possible implementations of the second aspect.

It may be understood that for beneficial effects achieved by technical solutions in the third aspect to the thirteenth aspect and the corresponding possible implementations thereof, refer to the foregoing technical effects in the first aspect and the second aspect and the corresponding possible implementations thereof. Details are not described herein again.

### BRIEF DESCRIPTION OF DRAWINGS

FIG. 1 is a schematic diagram of an architecture of a communication system in a service scenario of a human customer service according to an embodiment of this application;
FIG. 2 is a schematic flowchart of a voice call according to an embodiment of this application;
FIG. 3 is a schematic flowchart of a video call according to an embodiment of this application;
FIG. 4A is a schematic diagram of hardware of a mobile phone according to an embodiment of this application;
FIG. 4B is a block diagram of a software structure of a mobile phone according to an embodiment of this application;
FIG. 5 is a schematic diagram of hardware of a server according to an embodiment of this application;
FIG. 6A and FIG. 6B are a first schematic diagram of a communication method according to an embodiment of this application;
FIG. 7A and FIG. 7B are a second schematic diagram of a communication method according to an embodiment of this application;
FIG. 8 is a schematic diagram of a structure of a call terminal according to an embodiment of this application;
FIG. 9 is a schematic diagram of a structure of another call terminal according to an embodiment of this application;
FIG. 10 is a schematic diagram of a structure of a media server according to an embodiment of this application; and
FIG. 11 is a schematic diagram of a structure of another media server according to an embodiment of this application.

### DESCRIPTION OF EMBODIMENTS

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular order of the objects. For example, a first video call media transmission channel and a second video call media transmission channel are used to distinguish between different transmission beams, but are not used to describe a particular sequence of the video call media transmission channels.

In embodiments of this application, the word "example" or "for example" is used for representing giving an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

In the descriptions of embodiment of this application, unless otherwise stated, "a plurality of" means two or more. For example, a plurality of call terminals are two or more call terminals.

Currently, based on a mobile network, a voice call or a video call between users may be implemented by using terminals. Using a voice call as an example, a user 1 may dial, by using a terminal 1 held by the user 1, a number (for example, a phone number) of a terminal 2 held by a user 2. After the user 2 answers by using the terminal 2, a call connection may be established between the terminal 1 held by the user 1 and the terminal 2 held by the user 2, so that the user 1 and the user 2 may perform a voice call. For example, the terminal 1 acquires a voice of the user 1, and sends the acquired voice to the terminal 2, and the terminal 2 acquires a voice of the user 2, and sends the acquired voice to the terminal 1.

It may be understood that, in a scenario of a call between terminals, one of the terminals may be referred to as a call terminal, and a peer end that communicates with the call terminal is referred to as a peer call terminal. For example, if the terminal 1 is a call terminal, the terminal 2 is a peer call terminal. Optionally, there may be a plurality of peer call terminals for one call terminal. For example, three terminals (for example, a terminal 1, a terminal 2, and a terminal 3) perform a three-party session, where the terminal 1 is a call terminal, and peer ends of the terminal 1, namely, the terminal 2 and the terminal 3, are both peer call terminals.

The following uses two call terminals (to be specific, one call terminal and one peer call terminal) as an example to briefly describe a transmission principle of a media stream in a process of a voice call and a video call between the call terminal and the peer call terminal.

When the call terminal and the peer call terminal perform a voice call, a media stream transmitted between the call terminal and the peer call terminal is a voice stream. After the call terminal and the peer call terminal establish a voice call media transmission channel (which may also be referred to as a voice stream transmission channel for short), the call terminal and the peer call terminal may transmit the voice stream based on the voice stream transmission channel. For example, the call terminal sends, to the peer call terminal through the voice stream transmission channel, a voice stream that is acquired by a microphone of the call terminal and that is of a user corresponding to the call terminal, and the peer call terminal sends, to the call terminal through the voice stream transmission channel, a voice stream that is acquired by a microphone of the peer call terminal and that is of a peer user corresponding to the peer call terminal.

When the call terminal and the peer call terminal perform a video call, media streams transmitted between the call terminal and the peer call terminal include a voice stream and a video stream, and transmission channels of the voice stream and the video stream are different. Specifically, after a voice call media transmission channel (namely, a voice stream transmission channel) and a video call media transmission channel (which may be referred to as a video stream transmission channel for short) are established, the call terminal and the peer call terminal may transmit the voice stream based on the voice stream transmission channel, and the call terminal and the peer call terminal may transmit the video stream based on the video stream transmission channel. For example, the call terminal sends, to the peer call terminal through the voice stream transmission channel, a voice stream that is acquired by a microphone of the call terminal and that is of a user corresponding to the call terminal, and the peer call terminal sends, to the call terminal through the voice stream transmission channel, a voice stream that is acquired by a microphone of the peer call terminal and that is of a peer user corresponding to the peer call terminal. The call terminal sends, to the peer call terminal through the video stream transmission channel, a video stream that is captured by a camera of the call terminal and that is of the user corresponding to the call terminal, and the peer call terminal sends, to the call terminal through the video stream transmission channel, a video stream that is captured by a camera of the peer call terminal and that is of the peer user corresponding to the peer call terminal.

A whiteboard is software that can implement a multimedia interaction function (it should be noted that the whiteboard in embodiments of this application is whiteboard software). A user may perform a touch operation on a whiteboard picture. The touch operation may be a tap operation on a first whiteboard picture, or may be a slide operation, such as writing, marking, or drawing, on the first whiteboard picture. It should be noted that a specific form of the touch operation is not limited in embodiments of this application, and any operation that can generate a trace on the whiteboard picture may be considered as a touch operation. Users may perform operations such as interaction and demonstration by performing touch operations on the whiteboard picture. For example, a user 1 may write on the whiteboard picture, and then display the whiteboard picture including a writing trace of the user 1 to a user 2, and the user 2 may continue to write on the whiteboard picture, and display the whiteboard picture including a writing trace of the user 2 to the user 2. In this way, the two users can communicate more effectively. Currently, the whiteboard is widely used in scenarios such as a remote conference, remote teaching, and a remote customer service. In embodiments of this application, whiteboard interaction means that a plurality of users perform touch operations on a same whiteboard picture, and then respective touch traces of the plurality of users on the whiteboard picture are simultaneously displayed to the users.

Embodiments of this application mainly relate to a scenario in which a whiteboard is applied to a customer service. A user interacts with a customer service person via the whiteboard, so that the user can clearly describe a problem, and the customer service person can also accurately provide a solution. In this way, the problem of the user can be resolved in a targeted and efficient manner, and work efficiency of the customer service person can be improved. Further, the user may not need to perform onsite handling (namely, offline handling), and a traditional offline service is changed to an online service.

In a process of a voice call or a video call between two users, it is assumed that the two users need to interact with each other based on a whiteboard. Using whiteboard interaction between the call terminal and the peer call terminal as an example, currently, an implementation is as follows: A whiteboard application (APP) needs to be installed on both the call terminal and the peer call terminal, and a transmission channel for transmitting whiteboard media data is established between the whiteboard APP on the call terminal and the whiteboard APP on the peer call terminal by a server. In embodiments of this application, the whiteboard media data is data used to present a whiteboard picture that includes a touch trace, and then the call terminal and the peer call terminal transmit the whiteboard media data through the transmission channel. For example, in one case, after a first user corresponding to the call terminal performs a touch operation on a whiteboard picture in the whiteboard APP to generate first touch trace data, the first touch trace data is sent to the server through the transmission channel; a second user corresponding to the peer call terminal may also perform a touch operation on the whiteboard picture to generate second touch trace data, and then the second touch trace data is sent to the server through the transmission channel; and further, the server sends, to the call terminal and the peer call terminal respectively through the transmission channel, whiteboard media data used to present a first touch trace corresponding to the first touch trace data and a second touch trace corresponding to the second touch trace data, so as to display, on the call terminal and the peer call terminal respectively, a whiteboard picture including the first touch trace and the second touch trace.

When whiteboard interaction is performed in the process of the voice call or the video call of the two users, the transmission channel dedicated for transmitting, between the call terminal and the peer call terminal, a labelled media by using data needs to be established, where the transmission channel is different from the voice stream transmission channel and the video stream transmission channel.

It may be understood that, if whiteboard interaction is performed in a process of a call between a call terminal and a peer call terminal (to be specific, a touch operation is performed on a whiteboard picture, and whiteboard media data is transmitted to the peer party), extra time needs to be spent on establishing a transmission channel for transmitting the whiteboard media data, and the call terminal or the peer call terminal also needs to use an additional port to transmit the whiteboard media data. For example, if whiteboard interaction is performed in a process of a voice call between the call terminal and the peer call terminal, a voice stream is transmitted between the call terminal and the peer call terminal based on a voice stream transmission channel, and whiteboard media data is transmitted between the call terminal and the peer call terminal based on an established transmission channel dedicated to transmitting the whiteboard media data. For another example, if whiteboard interaction is performed in a process of a video call between the call terminal and the peer call terminal, a video stream captured by a camera is transmitted between the call terminal and the peer call terminal based on a video stream transmission channel, and whiteboard media data is transmitted between the call terminal and the peer call terminal based on an established channel dedicated to transmitting the whiteboard media data. In conclusion, it can be learned that establishing the transmission channel dedicated to transmitting the whiteboard media data needs to occupy extra time, and transmitting the whiteboard media data needs to occupy additional port resources of the terminal.

For a problem in the conventional technology that establishing a transmission channel dedicated to transmitting whiteboard media data needs to occupy extra time and needs to occupy additional port resources of a terminal, embodiments of this application provide a communication method, an apparatus, and a system. The communication method may be applied to a process of a call between terminals. A call terminal, a media server, and a peer call terminal in the communication system establish a video call media transmission channel through interaction, and a call video stream between the call terminal and the peer call terminal is transmitted through the video call media transmission channel, so as to implement a video call service between the call terminal and the peer call terminal, where the call video stream includes video content shot by the call terminal or the peer call terminal. Then, the call terminal presents a first whiteboard picture on a call interface of the call terminal based on first whiteboard media data, where the first whiteboard picture is a blank picture; detects a first touch operation of a first user corresponding to the call terminal on the first whiteboard picture, and generates first touch trace data used to describe a first touch trace generated by the first touch operation; sends the first touch trace data to the media server; and the media server receives second touch trace data from the peer call terminal, where the second touch trace data is data generated by performing, by a second user corresponding to the peer call terminal, a second touch operation on a whiteboard picture that is presented on a call interface of the peer call terminal and that corresponds to the first whiteboard picture, and the second touch trace data is used to describe a second touch trace generated by the second touch operation. Further, the call terminal receives second whiteboard media data from the media server through the video call media transmission channel, and presents a second whiteboard picture on the call interface based on the second whiteboard media data, where the second whiteboard picture includes the first touch trace and the second touch trace. The media server sends third whiteboard media data to the peer call terminal through the video call media transmission channel, so that the peer call terminal presents the second whiteboard picture on the call interface of the peer call terminal based on the third whiteboard media data. According to the technical solution provided in embodiments of this application, the call terminal, the media server, and the peer call terminal may transmit the whiteboard media data based on the existing video call media transmission channel, without spending extra time to establish a transmission channel dedicated to transmitting the whiteboard media data, and without occupying additional port resources of the call terminal.

Further, in comparison with an existing communication method, in the technical solution provided in embodiments of this application, no whiteboard APP needs to be installed on a terminal. In this way, an operator does not need to perform a complex related operation, and the operator does not need to have high operation skills.

Optionally, the communication method provided in embodiments of this application may be applied to a process of a call between two call terminals, or may be applied to a process of a call between a plurality of call terminals.

Optionally, the communication method provided in embodiments of this application may be applied to a video conference scenario, a customer service scenario, and the like. The customer service scenario is a scenario of a call between a user and a customer service center (which may also be referred to as a customer service system). The call between the user and the customer service center may satisfy some service requirements of the user. For example, customer care services such as electronic products, insurance, and mobile communication all related to the customer service scenario. Generally, a user may dial a phone number of a customer service center to establish a call connection to the customer service center. Currently, in an actual application, most customer service processes are as follows: A user dials a phone number of a customer service center (initiates a call), and after the customer service center answers the call, the customer service center first pushes (that is, plays) some prompt content (the prompt content is pre-stored in the customer service center) to the user. The user may select a service option based on the prompt content. The customer service center provides a targeted service for the user based on the service option selected by the user (for example, replies to the service option selected by users and solve a problem raised by the user).

In addition, the user may alternatively select a manual service based on the pushed prompt content. In this case, a service scenario of a human customer service is entered. The service scenario of the human customer service is a scenario in which the user talks with a staff member of the customer service center in a process of a call between the user and the customer service center. In other words, after the user selects the manual service based on the prompt content pushed by the customer service center, the customer service center continues to call the staff member of the customer service center (specifically calls, by using a number of a terminal held by the staff member, the terminal). In the following embodiments, the customer service center may be referred to as a customer service or a customer service system for short, and the staff member of the customer service center may be referred to as a customer service person for short. A service scenario of a human customer service is used as an example. A user calls a customer service system by using a call terminal held by the user (which may be referred to as a user call terminal for short). When the call is transferred to a manual service, after a customer service person answers, a call terminal held by the customer service person (which may be referred to as a customer service call terminal for short) and the user call terminal are in a call. In embodiments of this application, after the customer service call terminal and the user call terminal start a call, the customer service person or the user may apply for whiteboard interaction. In this way, the customer service person and the user may perform touch operations on a whiteboard picture, and transmit whiteboard media data through a media server, to present, at all the ends, a whiteboard picture including touch traces of all the ends. Therefore, guidance may be provided for the user based on a problem raised by the user. This can efficiently solve the problem of the user and improve service quality.

It should be noted that, in embodiments of this application, a service scenario of a human customer service is used as an example to describe the communication method provided in embodiments of this application. It may be understood that, in a service scenario of a human customer service, after a user call terminal initiates a call, and a customer service call terminal answers the call, whiteboard interaction is implemented in a process of the call between the user call terminal and the customer service call terminal.

Optionally, in embodiments of this application, the call initiated by the user call terminal may be a voice call or a video call. It should be noted that, when a user initiates a voice call and calls a customer service person, after the customer service person in a customer service system answers the call, a voice stream transmission channel is first established through media resource negotiation. If a whiteboard interaction application is initiated in a voice call process, media resource renegotiation is further required to establish a video stream transmission channel, to convert the voice call to a video call, and then whiteboard media data is transmitted based on the video stream transmission channel corresponding to the video call. When a user initiates a video call, after a customer service person in a customer service system answers the call, a video stream transmission channel is established through media resource negotiation, and then whiteboard media data is transmitted based on the video stream transmission channel.

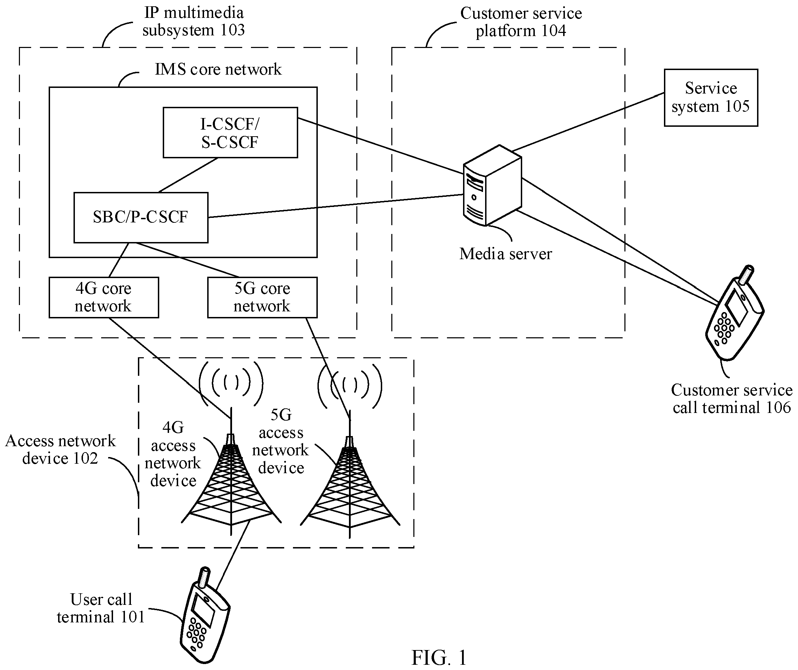

A communication system corresponding to a customer service scenario may be considered as a conference control system. The communication system relates to an access network, an IP multimedia subsystem (namely, an IMS, including a 4G/5G core network and an IMS core network), a customer service platform (which may also be referred to as a customer service system), a service system, and the like. The following describes an architecture of the communication system in the customer service scenario. As shown in FIG. 1, the communication system specifically includes: a user call terminal 101, an access network device 102, an IP multimedia subsystem 103, a customer service platform 104, a service system 105, and a customer service call terminal 106. The IP multimedia subsystem 103 includes a core network (which may be a 4G core network and/or a 5G core network) and an IMS core network. It may be understood that the 4G core network includes a gateway device (for example, an S-GW or a P-GW); the 5G core network includes a user plane function (UPF) network element, a mobility management function (AMF) network element, and the like; the IMS core network includes a session border controller SBC, a proxy-call session control function P-CSCF device, a call session control function I-CSCF network element, and a serving call session control function S-CSCF network element. The customer service platform 104 includes a media server.

The SBC is configured to provide secure access and media processing.

The P-CSCF is an entry node device for the user call terminal to access the IMS core network, and is responsible for signaling and message proxy.

The I-CSCF is a unified initial entry node device of the IMS core network and is responsible for assigning and querying the S-CSCF for user registration.

The S-CSCF is a central node device of the IMS core network, and is mainly used for user registration, authentication control, session routing, service triggering control, and session status information maintenance.

For the media server, in embodiments of this application, in a communication system corresponding to a conventional customer service scenario, the customer service platform 104 includes a control server (which may also be referred to as a signaling server) and the media server. Functions of the signaling server are mainly responsible for signaling negotiation and processing, and controlling a user call terminal and a customer service call terminal to join or exit a call. Functions of the media server are mainly responsible for audio and video processing and playing, application and release of a call site, audio encoding and decoding, video encoding and decoding, and hybrid encoding processing. In some implementations, the functions of the media server and the control server may be integrated into one server. In embodiments of this application, an example in which the functions of the media server and the control server are integrated into the media server is used to describe the communication method provided in embodiments of this application.

The service system is responsible for determining, based on numbers of a calling party (for example, the call user terminal) and a called party, to trigger different service processes. Different services may include but are not limited to a video call, a video advertisement, and an enterprise video show.

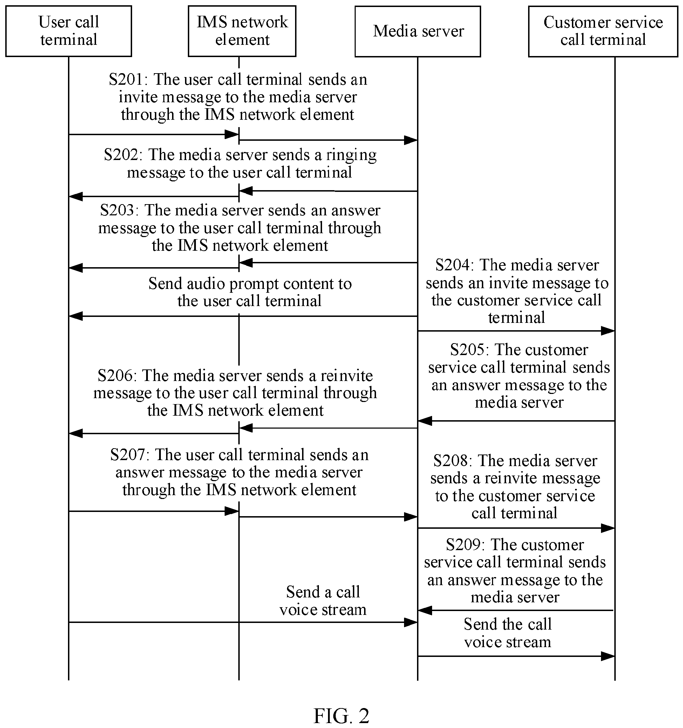

With reference to the architecture of the communication system shown in FIG. 1, a voice call procedure is described by using a voice call as an example on a basis that the user call terminal accesses the access network and establishes a session through the 4G core network or the 5G core network and the IMS core network, to facilitate understanding of a voice call procedure in a customer service scenario. Refer to FIG. 2. The voice call procedure includes the following steps.

S201: The user call terminal sends an invite (invite) message to the media server through an IMS network element.

Specifically, with reference to the schematic diagram of the architecture of the communication system shown in FIG. 1, the IMS includes a network element (including the gateway device/the user plane function network element) of the 4G/5G core network, and the SBC/P-CSCF network element and the I-CSCF/S-CSCF network element of the IMS core network. In embodiments of this application, the network elements in the IMS may be collectively referred to as IMS network elements. That the user call terminal sends an invite message to the media server through an IMS network element specifically includes: The user call terminal sends the invite message to the media server sequentially through the network element of the 4G/5G core network, the SBC/P-CSCF network element, and the I-CSCF/S-CSCF network element based on the architecture diagram shown in FIG. 1. It should be noted that the IMS network element is configured to transparently transmit a message between the user call terminal and the media server, without processing the message.

It should be noted that, in the following embodiments, that a message or information is sent or received through the IMS network element is similar to that the invite message is transmitted through the IMS network element in S201. The IMS network element is configured to transparently transmit a message or information. This is not described in detail in the following embodiments.

It may be understood that, after a user dials an access code of a customer service (which may be understood as a phone number of the customer service system) by using the user call terminal, the user call terminal performs S201. For example, the customer service may be a customer service of a communication carrier or a customer service of an internet carrier (for example, a customer service corresponding to a banking service or a customer service corresponding to an insurance service). A type of the customer service is not limited in this application.

It should be noted that, the customer service call terminal in embodiments of this application is a call terminal corresponding to a customer service person in the customer service system, and the customer service call terminal belongs to a part of the customer service system. It may be understood that the user calls the customer service system by using the user call terminal, and after the customer service system answers the call, the media server on the customer service platform plays audio prompt content related to a service of the user, to prompt the user to select a corresponding service based on an actual requirement. When the user selects a manual service, the media server in the customer service system continues to call the customer service call terminal. This is specifically understood with reference to related steps in the following embodiment.

In this embodiment of this application, the user call terminal sends the invite message by using the session initiation protocol (session initiation protocol, SIP), or it may be understood that the invite message is sent by using a SIP message, where the invite message carries session description protocol (session description protocol, SDP) information of the user call terminal, the SDP information includes address information, audio port information, and an audio encoding/decoding format of the user call terminal, and the SDP information is used for media resource negotiation with the media server, to establish a voice call media transmission channel that is between the user call terminal and the media server and that is for transmitting a call voice stream. In this embodiment of this application, address information of a device may be an IP address of the device.

S202: The media server sends a ringing message to the user call terminal.

The ringing message indicates that a call, to the customer service phone, initiated by the user is being connected. In this case, the user call terminal is in a ringing state of waiting for the customer service system to answer (that is, hook off). The ringing message may be an 18* series message, for example, a 181 message (to be specific, call being forwarded, indicating that a call is being forwarded) or a 183 message (used to prompt a progress of establishing a call). The ringing message carries SDP information of the media server, and the SDP information includes an IP address, audio port information, and an audio encoding/decoding format of the media server. The SDP information is used for media resource negotiation with the user call terminal, to establish the voice call media transmission channel that is between the user call terminal and the media server and that is for transmitting the call voice stream.

S203: The media server sends an answer message to the user call terminal through the IMS network element.

It may be understood that, after the media server sends the ringing message to the user call terminal, the user call terminal waits for the customer service system to answer (that is, waits for being connected). In this process, the user may hear a waiting tone of "beep...beep...", or may hear a ring back tone. After the customer service system answers, the call is connected, and the media server performs S203.

Similarly, the IMS network element is configured to transparently transmit the answer message.

In this embodiment of this application, after the customer service system answers the call of the user call terminal, the media server may play audio prompt content related to a service of the user. Specifically, the media server sends the audio prompt content to the user call terminal based on the established voice call media transmission channel, where the audio prompt content may prompt the user to select different service content as required. For example, if the voice call is a voice call in a scenario in which the user calls a communication carrier, the audio prompt content may include the following content:

Press 1 for call fee and traffic query, press 2 for the broadband service, press 3 for the recharge service, press 4 for service query and handling, press 5 for the password service, press 6 for the enterprise service, press 0 for the manual service, and so on. Optionally, the audio prompt content may further include some advertisements, publicity, and other content. The audio prompt content is related to a specific application scenario, and is not limited in this application.

When the user performs an operation based on the prompt of the audio prompt content and selects the manual service, after the media server detects the operation of selecting the manual service, the media server allocates one customer service person to the user (to be specific, selects a corresponding customer service call terminal for the user call terminal), and then the media server performs the following S204.

S204: The media server sends an invite (invite) message to the customer service call terminal.

The invite message is used for a voice call between the customer service call terminal and the user call terminal, the invite message includes the SDP information of the media server, and the SDP information of the media server includes the IP address, the audio port information, and the audio encoding/decoding format of the media server. The SDP information is used for media resource negotiation with the customer service call terminal, to establish a voice call media transmission channel for transmitting a call voice stream between the customer service call terminal and the media server.

S205: The customer service call terminal sends an answer message to the media server.

After the customer service call terminal sends the answer message, the customer service call terminal joins the call with the user call terminal, where the answer message includes SDP information of the customer service call terminal, and the SDP information of the customer service call terminal includes an IP address, audio port information, and an audio encoding/decoding format of the customer service call terminal. The SDP information is used for media resource negotiation with the media server, to establish a voice call media transmission channel for transmitting a call voice stream between the customer service call terminal and the media server.

It may be understood that, because the customer service call terminal is a new device in the customer service system for communicating with the user call terminal, in a subsequent procedure, to implement communication between the user call terminal and the customer service call terminal, media resource renegotiation needs to be performed again, to be specific, the media server and the user call terminal perform media resource renegotiation (refer to S206 and S207), and the media server and the customer service call terminal perform media resource renegotiation (refer to S208 and S209). A voice stream transmission channel (namely, a voice call media transmission channel) may be established through the media resource renegotiation. It should be noted that the voice call media transmission channel established by using S206 to S209 is a transmission channel that requires the media server as a medium, namely, an indirect voice call media transmission channel, where the voice call media transmission channel includes a voice call media transmission channel between the user call terminal and the media server, and a voice call media transmission channel between the media server and the customer service call terminal.

S206: The media server sends a reinvite (reinvite) message to the user call terminal through the IMS network element.

The reinvite message is used for media resource renegotiation with the user call terminal, to establish the voice call media transmission channel between the user call terminal and the media server, where the reinvite message includes the SDP information of the media server, and the SDP information of the media server includes the IP address, the audio port information, and the audio encoding/decoding format of the media server.

S207: The user call terminal sends an answer message to the media server through the IMS network element.

The answer message includes the SDP information of the user call terminal, and the SDP information of the user call terminal includes the IP address, the audio port information, and the audio encoding/decoding format of the user call terminal.

In the media resource negotiation process described in S206 and S207, the user call terminal may obtain the SDP information of the media server, and the media server may also obtain the SDP information of the user call terminal. In this way, the voice call media transmission channel between the user call terminal and the media server is established.

S208: The media server sends a reinvite (reinvite) message to the customer service call terminal.

The reinvite message is used for media resource renegotiation with the customer service call terminal, to establish the voice call media transmission channel between the customer service call terminal and the media server, where the reinvite message includes the SDP information of the media server, and the SDP information of the media server includes the IP address, the audio port information, and the audio encoding/decoding format of the media server.

S209: The customer service call terminal sends an answer message to the media server.

The answer message includes the SDP information of the customer service call terminal, and the SDP information of the customer service call terminal includes the IP address, the audio port information, and the audio encoding/decoding format of the customer service call terminal.

In the media resource negotiation process described in S208 and S209, the customer service call terminal may obtain the SDP information of the media server, and the media server may also obtain the SDP information of the customer service call terminal. In this way, the voice call media transmission channel between the customer service call terminal and the media server is established.

It may be understood that, the voice call media transmission channel (including the voice call media transmission channel between the user call terminal and the media server, and the voice call media transmission channel between the customer service call terminal and the media server) established by using S206 to S209 is for transmitting a call voice stream between the customer service call terminal and the user call terminal. For example, based on the established voice call media transmission channel, when the user call terminal sends a call voice stream to the customer service call terminal, the user call terminal sends the call voice stream to the media server based on the voice call media transmission channel between the user call terminal and the media server, and then the media server sends the received call voice stream to the customer service call terminal based on the voice call media transmission channel between the media server and the customer service call terminal.

Optionally, in some cases, a voice call media transmission channel, that is directly for transmitting a call voice stream, between the user call terminal and the customer service call terminal may alternatively be established through media resource negotiation. It should be noted that the voice call media transmission channel, that is directly for transmitting the call voice stream, between the user call terminal and the customer service call terminal is a channel that does not require the media server as a transit device, and is not necessarily a direct connection channel between the user call terminal and the customer service call terminal. In this case, S206 to S209 may be replaced with S206' to S210'.

S206': The media server sends a reinvite (reinvite) message to the user call terminal through the IMS network element.

The reinvite message is used for media resource renegotiation with the user call terminal. The reinvite message includes the SDP information of the media server, and the SDP information of the media server includes the IP address, the audio port information, and the audio encoding/decoding format of the media server.

S207': The user call terminal sends an answer message to the media server through the IMS network element.

The answer message includes the SDP information of the user call terminal, and the SDP information of the user call terminal includes the IP address, the audio port information, and the audio encoding/decoding format of the user call terminal.

S208': The media server sends a reinvite (reinvite) message to the customer service call terminal.

The reinvite message is used for media resource renegotiation with the customer service call terminal. The reinvite message includes the SDP information of the user call terminal, and the SDP information of the user call terminal includes an IP address, the audio port information, and the audio encoding/decoding format of the user call terminal.

S209': The customer service call terminal sends an answer message to the media server.

The answer message includes the SDP information of the customer service call terminal, and the SDP information of the customer service call terminal includes the IP address, the audio port information, and the audio encoding/decoding format of the customer service call terminal.

S2 10': The media server sends an answer message carrying the SDP information of the customer service call terminal to the user call terminal.

In the media resource negotiation process from S206' to S210', the user call terminal may obtain the SDP information of the customer service call terminal, and the customer service call terminal may obtain the SDP information of the user call terminal, in other words, the voice call media transmission channel between the user call terminal and the customer service call terminal is established. Based on the established voice call media transmission channel, the user call terminal and the customer service call terminal may directly communicate with each other, and the media server does not need to forward a call voice stream. For example, the user call terminal may directly send a call voice stream to the customer service call terminal based on the voice call media transmission channel between the user call terminal and the media server. Similarly, the customer service call terminal may also directly send a call voice stream to the user call terminal based on the voice call media transmission channel.

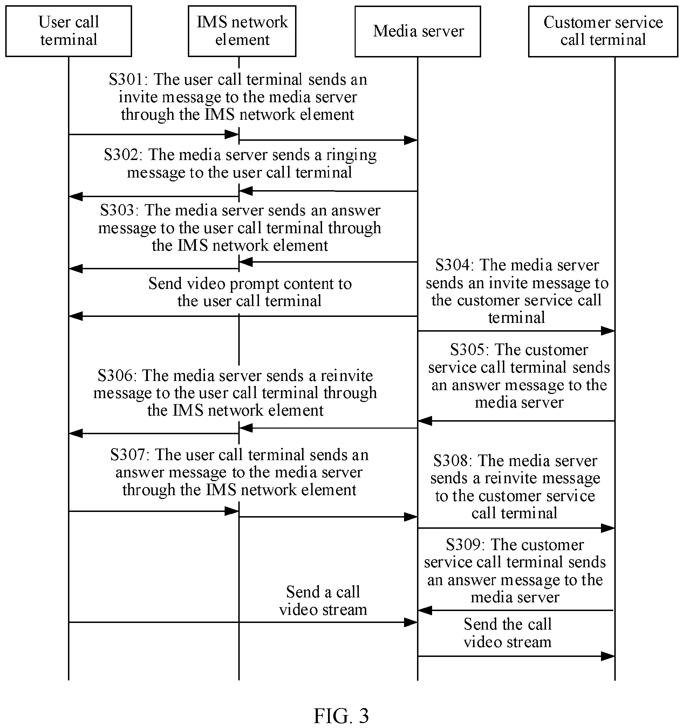

With reference to the architecture of the communication system shown in FIG. 1, a video call procedure is described by using a video call as an example on a basis that the user call terminal accesses the access network and the 4G core network or the 5G core network, and the IMS core network, so as to understand a video call procedure in a customer service scenario. The video call procedure is similar to the foregoing voice call procedure. For related content in the video call procedure, refer to the descriptions in the voice call procedure. Refer to FIG. 3. The video call procedure includes the following steps.

S301: The user call terminal sends an invite (invite) message to the media server through an IMS network element.

The invite message carries SDP information of the user call terminal, and the SDP information includes an IP address, audio port information, an audio encoding/decoding format, video port information, and a video encoding/decoding format of the user call terminal. The SDP information is used for media resource negotiation with the media server, to establish a voice call media transmission channel for transmitting a call voice stream and a video call media transmission channel for transmitting a call video stream between the user call terminal and the media server. It may be understood that, the video call process includes transmission of the call voice stream and the call video stream. Therefore, in comparison with an audio call process, the SDP information in the video call process further needs to include the video port information and the video encoding/decoding format.

S302: The media server sends a ringing message to the user call terminal.

The ringing message carries SDP information of the media server, and the SDP information includes an IP address, audio port information, an audio encoding/decoding format, video port information, and a video encoding/decoding format of the media server. The SDP information is used for media resource negotiation with the user call terminal, to establish the voice call media transmission channel for transmitting the call voice stream and the video call media transmission channel for transmitting the call video stream between the user call terminal and the media server.

S303: The media server sends an answer message to the user call terminal through the IMS network element.

In this embodiment of this application, when a user initiates a video call, after the customer service system answers the call of the user call terminal, the media server may play video prompt content related to a service of the user. Specifically, the media server sends the video prompt content to the user call terminal based on the established voice call media transmission channel and video call media transmission channel, where the video prompt content may prompt the user to select different service content as required.

When the user performs an operation based on the prompt of the video prompt content and selects a manual service, after the media server detects the operation of selecting the manual service, the media server allocates one customer service person to the user (to be specific, selects a corresponding customer service call terminal for the user call terminal), and then the media server performs the following S304.

S304: The media server sends an invite (invite) message to the customer service call terminal.

The invite message is used for a video call between the customer service call terminal and the user call terminal, where the invite message includes the SDP information of the media server, and the SDP information of the media server includes the IP address, the audio port information, the audio encoding/decoding format, the video port information, and the video encoding/decoding format of the media server. The SDP information is used for media resource negotiation with the customer service call terminal, to establish a voice call media transmission channel for transmitting a call voice stream and a video call media transmission channel for transmitting a call video stream between the customer service call terminal and the media server.

S305: The customer service call terminal sends an answer message to the media server.

After the customer service call terminal sends the answer message, the customer service call terminal joins the video call with the user call terminal, where the answer message includes SDP information of the customer service call terminal, and the SDP information of the customer service call terminal includes an IP address, audio port information, an audio encoding/decoding format, video port information, and a video encoding/decoding format of the customer service call terminal. The SDP information is used for media resource negotiation with the media server, to establish the voice call media transmission channel for transmitting the call voice stream and the video call media transmission channel for transmitting the call video stream between the customer service call terminal and the media server.

It may be understood that, because the customer service call terminal is a new device in the customer service system for communicating with the user call terminal, in a subsequent procedure, to implement communication between the user call terminal and the customer service call terminal, media resource renegotiation needs to be performed again, to be specific, the media server and the user call terminal perform media resource renegotiation (refer to S306 and S307), and the media server and the customer service call terminal perform media resource renegotiation (refer to S308 and S309). A voice call media transmission channel and a video call media transmission channel may be established through the media resource renegotiation. It should be noted that the voice call media transmission channel and the video call media transmission channel established by using S306 to S309 are transmission channels that require the media server as a medium, namely, an indirect voice call media transmission channel and an indirect video call media transmission channel, where the voice call media transmission channel includes a voice call media transmission channel between the user call terminal and the media server, and a voice call media transmission channel between the media server and the customer service call terminal, and the video call media transmission channel includes a video call media transmission channel between the user call terminal and the media server, and a video call media transmission channel between the media server and the customer service call terminal.

S306: The media server sends a reinvite (reinvite) message to the user call terminal through the IMS network element.

The reinvite message is used for media resource renegotiation with the user call terminal, to establish the voice call media transmission channel between the user call terminal and the media server, and the video call media transmission channel between the user call terminal and the media server, where the reinvite message includes the SDP information of the media server, and the SDP information of the media server includes the IP address, the audio port information, the audio encoding/decoding format, the video port information, and the video encoding/decoding format of the media server.

S307: The user call terminal sends an answer message to the media server through the IMS network element.

The answer message includes the SDP information of the user call terminal, and the SDP information of the user call terminal includes the IP address, the audio port information, the audio encoding/decoding format, the video port information, and the video encoding/decoding format of the user call terminal.

In the media resource negotiation process described in S306 and S307, the user call terminal may obtain the SDP information of the media server, and the media server may also obtain the SDP information of the user call terminal. In this way, the voice call media transmission channel between the user call terminal and the media server, and the video call media transmission channel between the user call terminal and the media server are established.

S308: The media server sends a reinvite (reinvite) message to the customer service call terminal.

The reinvite message is used for media resource renegotiation with the customer service call terminal, to establish the voice call media transmission channel between the customer service call terminal and the media server, and the video call media transmission channel between the customer service call terminal and the media server, where the reinvite message includes the SDP information of the media server, and the SDP information of the media server includes the IP address, the audio port information, the audio encoding/decoding format, the video port information, and the video encoding/decoding format of the media server.

S309: The customer service call terminal sends an answer message to the media server.

The answer message includes the SDP information of the customer service call terminal, and the SDP information of the customer service call terminal includes the IP address, the audio port information, the audio encoding/decoding format, the video port information, and the video encoding/decoding format of the customer service call terminal.

In the media resource negotiation process described in S308 and S309, the customer service call terminal may obtain the SDP information of the media server, and the media server may also obtain the SDP information of the customer service call terminal. In this way, the voice call media transmission channel between the customer service call terminal and the media server, and the video call media transmission channel between the customer service call terminal and the media server are established.

It may be understood that, the voice call media transmission channel (including the voice call media transmission channel between the user call terminal and the media server, and the voice call media transmission channel between the customer service call terminal and the media server) established by using the foregoing S306 to S309 is for transmitting a call voice stream between the customer service call terminal and the user call terminal. The video call media transmission channel (including the video call media transmission channel between the user call terminal and the media server, and the video call media transmission channel between the customer service call terminal and the media server) is established by using the foregoing S306 to S309, where the video call media transmission channel is for transmitting a call video stream between the customer service call terminal and the user call terminal.

Similar to the voice call process, optionally, in some cases, a voice call media transmission channel directly for transmitting a call voice stream and a video call media transmission channel directly for transmitting a call video stream between the user call terminal and the customer service call terminal may alternatively be established through media resource negotiation. In this case, S306 to S309 may be replaced with S306' to S310'.

S306': The media server sends a reinvite (reinvite) message to the user call terminal through the IMS network element.

The reinvite message is used for media resource renegotiation with the user call terminal, where the reinvite message includes the SDP information of the media server, and the SDP information of the media server includes the IP address, the audio port information, the audio encoding/decoding format, the video port information, and the video encoding/decoding format of the media server.

S307': The user call terminal sends an answer message to the media server through the IMS network element.

The answer message includes the SDP information of the user call terminal, and the SDP information of the user call terminal includes the IP address, the audio port information, the audio encoding/decoding format, the video port information, and the video encoding/decoding format of the user call terminal.

S308': The media server sends a reinvite (reinvite) message to the customer service call terminal.

The reinvite message is used for media resource renegotiation with the customer service call terminal, where the reinvite message includes the SDP information of the user call terminal, and the SDP information of the user call terminal includes the IP address, the audio port information, the audio encoding/decoding format, the video port information, and the video encoding/decoding format of the user call terminal.

S309': The customer service call terminal sends an answer message to the media server.

The answer message includes the SDP information of the customer service call terminal, and the SDP information of the customer service call terminal includes the IP address, the audio port information, the audio encoding/decoding format, the video port information, and the video encoding/decoding format of the customer service call terminal.

S310': The media server sends an answer message carrying the SDP information of the customer service call terminal to the user call terminal.

In conclusion, different from the voice call procedure, all the SDP information in the media negotiation process includes the video port information and the video encoding/decoding format of the device.

In the media resource negotiation process from S306' to S310', the user call terminal may obtain the SDP information of the customer service call terminal, and the customer service call terminal may obtain the SDP information of the user call terminal, in other words, the voice call media transmission channel and the video call media transmission channel between the user call terminal and the customer service call terminal are established. Based on the established voice call media transmission channel and video call media transmission channel, the user call terminal and the customer service call terminal may directly communicate with each other, and the media server does not need to forward a call voice stream and a call video stream.

Optionally, the user call terminal is a call terminal, and the customer service call terminal is a peer call terminal; or the customer service call terminal is a call terminal, and the user call terminal is a peer call terminal. This is specifically determined based on an actual situation, and is not limited in embodiments of this application.

In embodiments of this application, the call terminal (the call terminal or the peer call terminal) may be an electronic device such as a mobile phone, a tablet computer, or a personal computer (Ultra-mobile Personal Computer, UMPC). Alternatively, the call terminal may be another electronic device such as a desktop device, a laptop device, a handheld device, a wearable device, a smart home device, or a vehicle-mounted device, for example, a netbook, a smartwatch, a smart camera, or a personal digital assistant (Personal Digital Assistant, PDA). A specific type, a structure, and the like of the call terminal are not limited in embodiments of this application.

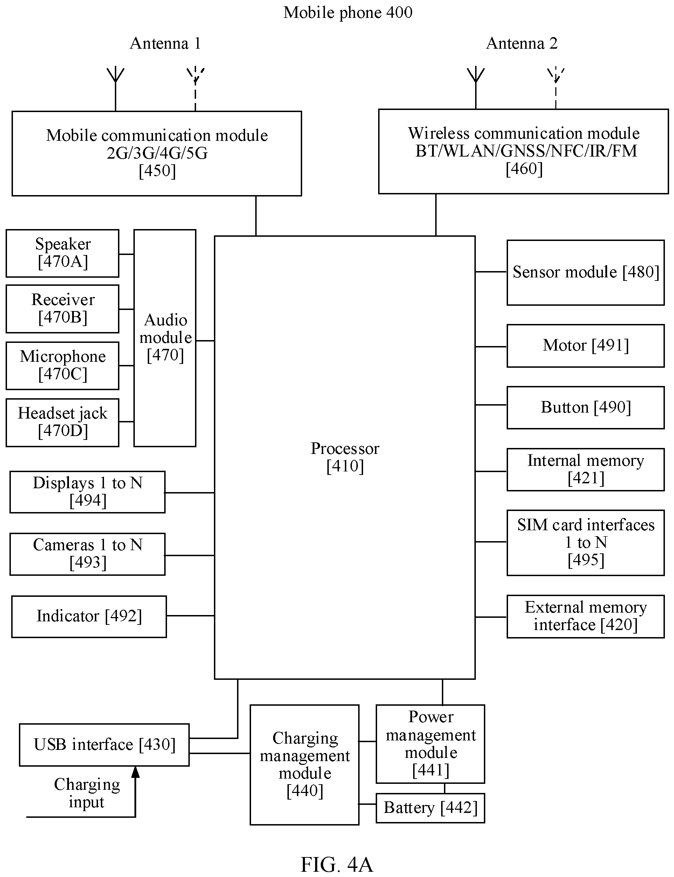

For example, the call terminal is a mobile phone. FIG. 4A is a schematic diagram of a hardware structure of a mobile phone 400 according to an embodiment of this application. The mobile phone 400 includes a processor 410, an external memory interface 420, an internal memory 421, a universal serial bus (universal serial bus, USB) interface 430, a charging management module 440, a power management module 441, a battery 442, an antenna 1, an antenna 2, a mobile communication module 450, a wireless communication module 460, an audio module 470, a speaker 470A, a receiver 470B, a microphone 470C, a headset jack 470D, a sensor module 480, a button 490, a motor 491, an indicator 492, a camera 493, a display 494, a subscriber identity module (subscriber identity module, SIM) card interface 495, and the like.

It may be understood that the structure shown in this embodiment of this application does not constitute a specific limitation on the mobile phone 400. In some other embodiments of this application, the mobile phone 400 may include more or fewer components than those shown in the figure, or some components may be combined, or some components may be split, or different component arrangements may be used. The components shown in the figure may be implemented by hardware, software, or a combination of software and hardware.

The processor 410 may include one or more processing units. For example, the processor 410 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the mobile phone 400. The controller may generate an operation control signal based on an instruction operation code and a time sequence signal, to complete control of instruction reading and instruction execution.

A memory may further be disposed in the processor 410, and is configured to store instructions and data. In some embodiments, the memory in the processor 410 is a cache. The memory may store an instruction or data that has just been used or is cyclically used by the processor 410. If the processor 410 needs to use the instruction or the data again, the processor 410 may directly invoke the instruction or the data from the memory. This avoids repeated access and reduces waiting duration of the processor 410 is reduced, so that system efficiency is improved.

The charging management module 440 is configured to receive a charging input from a charger. When charging the battery 442, the charging management module 440 may further supply power to the electronic device by using the power management module 441.

The power management module 441 is configured to be connected to the battery 442, the charging management module 440, and the processor 410. The power management module 441 receives an input from the battery 442 and/or the charging management module 440, and supplies power to the processor 410, the internal memory 421, the external memory, the display 494, the camera 493, the wireless communication module 460, and the like. The power management module 441 may further be configured to monitor parameters such as a battery capacity, a battery cycle count, and a battery health status (electric leakage or impedance). In some other embodiments, the power management module 441 may alternatively be disposed in the processor 410. In some other embodiments, the power management module 441 and the charging management module 440 may alternatively be disposed in a same component.

A wireless communication function of the mobile phone 400 may be implemented through the antenna 1, the antenna 2, the mobile communication module 450, the wireless communication module 460, the modem processor, the baseband processor, and the like.

The antenna 1 and the antenna 2 are configured to transmit and receive electromagnetic wave signals.

The mobile communication module 450 may provide a solution that is applied to the mobile phone 400 and that includes wireless communication such as 2G, 3G, 4G, and 5G. The mobile communication module 450 may receive an electromagnetic wave through the antenna 1, perform processing such as filtering and amplification on the received electromagnetic wave, and transmit a processed electromagnetic wave to the modem processor for demodulation. The mobile communication module 450 may further amplify a signal obtained through modulation by the modem processor, and convert an amplified signal into an electromagnetic wave through the antenna 1 for radiation. In some embodiments, at least some functional modules of the mobile communication module 450 may be disposed in the processor 410. In some embodiments, at least some functional modules of the mobile communication module 450 and at least some modules of the processor 410 may be disposed in a same device.

The wireless communication module 460 may provide a solution that is applied to the mobile phone 400 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 460 may be one or more components integrating at least one communication processing module. The wireless communication module 460 receives an electromagnetic wave through the antenna 2, performs frequency modulation and filtering processing on an electromagnetic wave signal, and sends a processed signal to the processor 410. The wireless communication module 460 may further receive a to-be-sent signal from the processor 410, perform frequency modulation and amplification on the signal, and convert, through the antenna 2, the signal into an electromagnetic wave for radiation.

In some embodiments, the antenna 1 of the mobile phone 400 is coupled to the mobile communication module 450, and the antenna 2 is coupled to the wireless communication module 460, so that the mobile phone 400 can communicate with a network and another device by using a wireless communication technology.

The mobile phone 400 implements a display function through the GPU, the display 494, the application processor, and the like. The GPU is a microprocessor for image processing, and is connected to the display 494 and the application processor. The GPU is configured to: perform mathematical and geometric computation, and render an image. The processor 410 may include one or more GPUs that execute program instructions to generate or change display information.

The display 494 is configured to display an image, a video, and the like. The display 494 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light emitting diode (flexible light emitting diode, FLED), a mini-LED, a micro-LED, a micro-OLED, a quantum dot light emitting diode (quantum dot light emitting diode, QLED), or the like. In some embodiments, the mobile phone 400 may include one or N displays 494, and N is a positive integer greater than 1.

The mobile phone 400 may implement a photographing function through the ISP, the camera 493, the video codec, the GPU, the display 494, the application processor, and the like.

The ISP is configured to process data fed back by the camera 493, and the camera 493 is configured to capture a static image or a video.

The digital signal processor is configured to process a digital signal, and may process another digital signal (for example, an audio signal) in addition to a digital image signal.

The video codec is configured to compress or decompress a digital video. The mobile phone 400 may support one or more video codecs. In this way, the mobile phone 400 may play or record videos in a plurality of encoding formats, for example, moving picture experts group (moving picture experts group, MPEG)-1, MPEG-2, MPEG-3, and MPEG-4.

The external memory interface 420 may be configured to connect to an external memory card such as a micro SD card, to extend a storage capability of the mobile phone 400. The external storage card communicates with the processor 410 through the external memory interface 420, to implement a data storage function. For example, files such as music and videos are stored in the external storage card.

The internal memory 421 may be configured to store computer-executable program code, where the computer-executable program code includes instructions. The processor 410 executes various functional applications and data processing of the mobile phone 400 by running the instructions stored in the internal memory 421. The internal memory 421 may include a program storage area and a data storage area. The program storage area may store an operating system, an application required by at least one function (for example, a voice playing function or an image playing function), and the like. The data storage area may store data (such as audio data and a phone book) and the like created during use of the mobile phone 400. In addition, the internal memory 421 may include a high-speed random access memory, or may include a non-volatile memory such as at least one magnetic disk memory, a flash memory, or a universal flash storage (universal flash storage, UFS).

The mobile phone 400 may implement an audio function, for example, music playing and recording, by using the audio module 470, the speaker 470A, the receiver 470B, the microphone 470C, the headset jack 470D, the application processor, and the like.

The audio module 470 is configured to convert digital audio information into an analog audio signal for output, and is also configured to convert an analog audio input into a digital audio signal. The audio module 470 may further be configured to encode and decode an audio signal. In some embodiments, the audio module 470 may be disposed in the processor 410, or some functional modules of the audio module 470 may be disposed in the processor 410.

The speaker 470A, also referred to as a "loudspeaker", is configured to convert an audio electrical signal into a sound signal. The mobile phone 400 may listen to music or answer a hands-free call through the speaker 470A.

The receiver 470B, also referred to as an "earpiece", is configured to convert an audio electrical signal into a sound signal. When a call is answered or voice information is received by using the mobile phone 400, the receiver 470B may be put close to a human ear to listen to a voice.

The microphone 470C, also referred to as a "mike" or a "mic", is configured to convert a sound signal into an electrical signal. When making a call or sending voice information, the user may make a sound near the microphone 470C through the mouth, to enter a sound signal to the microphone 470C. At least one microphone 470C may be disposed in the mobile phone 400. In some other embodiments, two microphones 470C may be disposed in the mobile phone 400, to acquire a sound signal and further implement a noise reduction function. In some other embodiments, three, four, or more microphones 470C may alternatively be disposed in the mobile phone 400, to acquire a sound signal, implement noise reduction, identify a sound source, implement a directional recording function, and the like.

The headset jack 470D is configured to connect to a wired headset.

The button 490 includes a power-on button, a volume button, and the like. The mobile phone 400 may receive a button input, and generate a button signal input related to user setting and function control of the mobile phone 400.

The motor 491 may generate a vibration prompt. The motor 491 may be used for an incoming call vibration prompt, or may be used for touch vibration feedback.

The indicator 492 may be an indicator light, and may indicate a charging status or a power change, or may indicate a message, a missed call, a notification, or the like.

The SIM card interface 495 is configured to connect to a SIM card. The SIM card may be inserted into the SIM card interface 495 or pulled out of the SIM card interface 495, so that the SIM card is in contact with or separated from the mobile phone 400.

It may be understood that in embodiments of this application, the mobile phone 400 may perform a part or all of the steps in embodiments of this application. The steps or operations are merely examples. The mobile phone 400 may further perform other operations or variations of various operations. In addition, the steps may be performed in a sequence different from a sequence presented in embodiments of this application, and not all the operations in embodiments of this application may be performed. Embodiments of this application may be separately implemented, or may be implemented in any combination. This is not limited in this application.

The communication method provided in embodiments of this application may be applied to a call terminal having the hardware structure shown in FIG. 4A or a call terminal having a similar structure. Alternatively, the method may be applied to a call terminal having another structure. This is not limited in embodiments of this application.

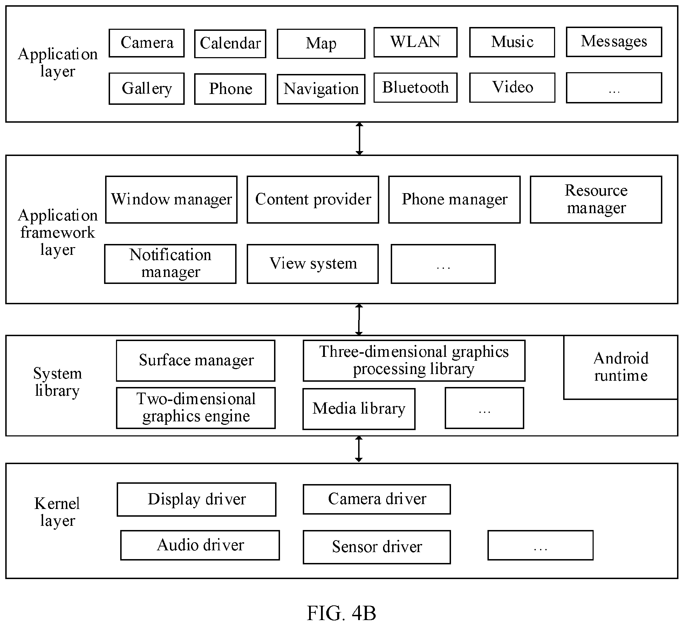

After the hardware structure of the call terminal is described, an example in which the call terminal is the mobile phone 400 is used herein in this application to describe a system architecture of the call terminal provided in this application. The system architecture of the mobile phone 400 may use a hierarchical architecture, an event driven architecture, a micro kernel architecture, a micro service architecture, or a cloud architecture. In an embodiment of this application, an Android system using a hierarchical architecture is used as an example to describe a software structure of the mobile phone 400. FIG. 4B is a block diagram of a software structure of a call terminal according to an embodiment of this application.

In a hierarchical architecture, software is divided into several layers, and each layer has a clear role and responsibility. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages. As shown in FIG. 4B, the application packages may include applications such as Camera, Gallery, Calendar, Phone, Map, Navigation, WLAN, Bluetooth, Music, Video, and Messages.

In this embodiment of this application, a call application (namely, a call APP) at the application layer of the mobile phone 400 may be used to perform a voice call or a video call with another call terminal. The call application is an application that is already in the mobile phone 400 before delivery, and a user does not need to perform operations such as installation or configuration.

It may be understood that, in the communication method provided in embodiments of this application, a function of implementing whiteboard interaction between a call terminal and a peer call terminal in a voice call or video call process is implemented based on call applications on the call terminal and the peer call terminal. It may alternatively be considered that the call terminal and the peer call terminal in embodiments of this application are specifically the call application on the call terminal or the peer call terminal.

The application framework layer provides an application programming interface (application programming interface, API) and a programming framework for an application at the application layer. The application framework layer includes some predefined functions.

As shown in FIG. 4B, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like. The view system includes visual controls such as a control for displaying a text and a control for displaying an image. The view system may be configured to construct an application. A display interface may include one or more views. For example, a display interface including an SMS message notification icon may include a text display view and an image display view. The phone manager is configured to provide a communication function of the call terminal, for example, management of a call status (including answering, hanging up, and the like). The resource manager provides various resources such as a localized character string, an icon, an image, a layout file, and a video file for an application. The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or an indicator light blinks.

The Android runtime includes a core library and a virtual machine. The Android runtime is responsible for scheduling and managing the Android system.

The kernel library includes two parts: a performance function that needs to be invoked in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules. For example, the functional modules include a surface manager (surface manager), media libraries (Media Libraries), a three-dimensional graphics processing library (for example, OpenGL ES), and a 2D graphics engine (for example, SGL).

The surface manager is configured to: manage a display subsystem and provide fusion of 2D and 3D layers for a plurality of applications. The media library supports playback and recording in a plurality of commonly used audio and video formats, and static image files. The media library may support a plurality of audio and video encoding formats, for example, MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

The kernel layer is a layer between hardware and software. The kernel layer includes at least a display driver, a camera driver, an audio driver, and a sensor driver.

The following describes an example of a working procedure of software and hardware of the mobile phone 400 with reference to a photographing scenario.

When a touch sensor of the mobile phone 400 receives a touch operation, a corresponding hardware interruption is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a single-tap operation and a control corresponding to the single-tap operation is a control of a camera application icon. A camera application invokes an interface at the application framework layer, so that the camera application is started. Then, the camera driver is started by invoking the kernel layer, and a static image or a video is captured by using the camera 493.

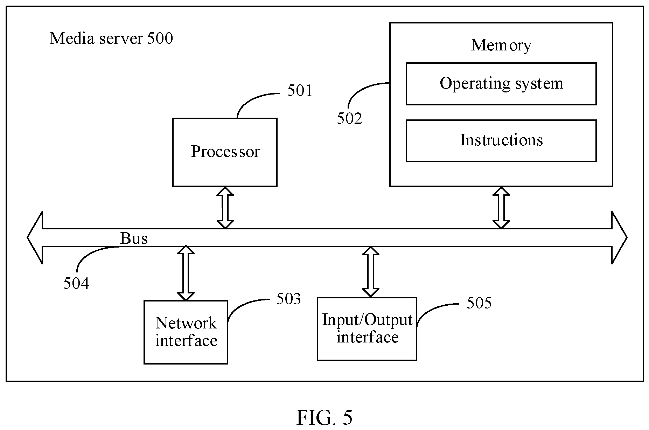

In embodiments of this application, the media server in the communication system may be a server in a hardware form, or may be a server in a software form. A server in a hardware form is used as an example. As shown in FIG. 5, an embodiment of this application provides a media server 500. The media server 500 includes at least one processor 501 and a memory 502.

The processor 501 includes one or more central processing units (central processing units, CPUs). The CPU is a single-core CPU (single-CPU) or a multi-core CPU (multi-CPU).

The memory 502 includes but is not limited to a random access memory (random access memory, RAM), a read-only memory (read-only memory, ROM), an erasable programmable read-only memory (erasable programmable read-only memory, EPROM), a flash memory, an optical memory, or the like. The memory 502 stores code of an operating system.

Optionally, the processor 501 implements the method in the foregoing embodiment by reading instructions stored in the memory 502, or the processor 501 implements the method in the foregoing embodiment by using internally stored instructions. When the processor 501 implements the method in the foregoing embodiment by reading the instructions stored in the memory 502, the memory 502 stores the instructions for implementing the communication method provided in the foregoing embodiment of this application.

After program code stored in the memory 502 is read by the at least one processor 501, the media server 500 performs the following operations: establishing a first video call media transmission channel and a second video call media transmission channel, and transmitting a call video stream between a call terminal and a peer call terminal through the first video call media transmission channel and the second video call media transmission channel, to implement a video call service between the call terminal and the peer call terminal; receiving a whiteboard interaction application from the call terminal; receiving first touch trace data from the call terminal, and receiving second touch trace data from the peer call terminal, to send second whiteboard media data to the call terminal through the first video call media transmission channel, so as to present a second whiteboard picture on a call interface of the call terminal; and sending third whiteboard media data to the peer call terminal through the second video call media transmission channel, to present the second whiteboard picture on a call interface of the peer call terminal.

Optionally, the media server 500 shown in FIG. 5 further includes a network interface 503. The network interface 503 is a wired interface, for example, a fiber distributed data interface (fiber distributed data interface, FDD I) or a gigabit ethernet (gigabit ethernet, GE) interface. Alternatively, the network interface 503 is a wireless interface. The network interface 503 is configured to receive a message (for example, a SIP message). Alternatively, the network interface 503 is configured to receive a call video stream or a call voice stream.

The memory 502 is configured to store an audio stream or a video stream received by the network interface 503, and the at least one processor 501 further performs, based on the information stored in the memory 502, the method described in the foregoing method embodiment. For more details of implementing the foregoing functions by the processor 501, refer to the descriptions in the foregoing method embodiments. Details are not described herein again.

Optionally, the media server 500 further includes a bus 504. The processor 501 and the memory 502 are usually connected to each other through the bus 504 or in another manner.

Optionally, the media server 500 further includes an input/output interface 505. The input/output interface 505 is configured to: connect to an input device, and receive an instruction entered by a user by using the input device. The input device includes, but is not limited to, a keyboard, a touchscreen, a microphone, and the like. The input/output interface 505 is further configured to: connect to an output device, and output a processing result of the processor 501. The output device includes, but is not limited to, a display, a printer, and the like.

With reference to the related descriptions of the foregoing embodiments, embodiments of this application provide a communication method. The method may be applied to call terminals (including a call terminal and a peer call terminal of the call terminal) that have the hardware structure shown in FIG. 4A and the system architecture shown in FIG. 4B and a media server that has the hardware structure shown in FIG. 5 in a communication system, and the communication method is implemented through interaction between the devices.

It should be noted that, in embodiments of this application, there is one call terminal, and there is at least one peer call terminal. In a service scenario of a human customer service, a device initiating a call is a user call terminal, and a called device is a customer service call terminal. In a process of a call between a user call terminal and a customer service call terminal, one or more third-party call terminals may further be invited to join the call. The customer service call terminal may perform a touch operation on a first whiteboard picture presented on a call interface of the customer service terminal, transmit generated first touch trace data to a media server, receive second whiteboard media data from the media server, and present a second whiteboard picture on the call interface of the customer service call terminal based on the second whiteboard media data.

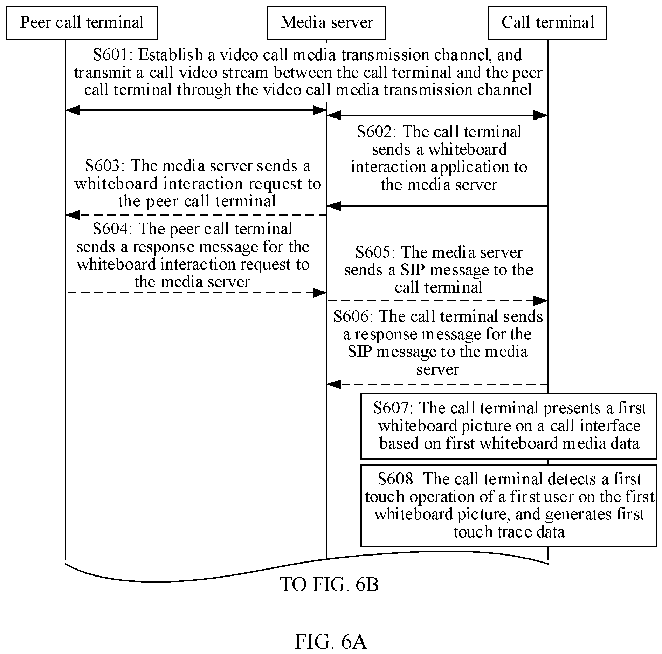

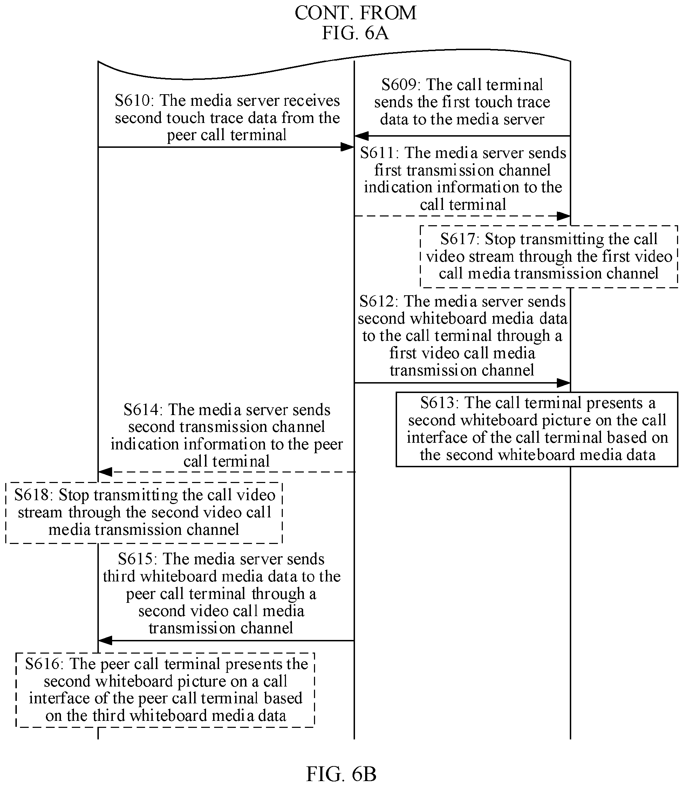

Based on the content of the foregoing embodiment, it can be learned that, in a customer service scenario, in a manual service phase, to be specific, in a process of a call between a customer service person and a user (to be specific, a customer service call terminal held by the customer service person and a user call terminal held by the user), the customer service person or the user may perform a touch operation on a whiteboard picture presented on a call interface of the customer service call terminal or the user call terminal. The following describes in detail the communication method provided in embodiments of this application. As shown in FIG. 6A and FIG. 6B, a communication method according to an embodiment of this application includes the following steps.

S601: Establish a video call media transmission channel, and transmit a call video stream between a call terminal and a peer call terminal through the video call media transmission channel, to implement a video call service between the call terminal and the peer call terminal.

In this embodiment of this application, the video call media transmission channel is established through interaction between the call terminal, a media server, and the peer call terminal, the video call media transmission channel is for transmitting the call video stream between the call terminal and the peer call terminal in the video call service, and the call video stream includes video content shot by the call terminal or the peer call terminal. It may be understood that, in this embodiment of this application, the call terminal and the peer call terminal are relative concepts. In two terminals participating in a call, any one terminal may be a call terminal, and the other terminal is a peer call terminal.

Optionally, the call terminal, the peer call terminal, and the media server participate in establishing the video call media transmission channel, and the video call media transmission channel is an indirect video call media transmission channel. The establishing a video call media transmission channel specifically includes: establishing a first video call media transmission channel, and establishing a second video call media transmission channel, where the first video call media transmission channel is a video call media transmission channel between the call terminal and the media server, and the second video call media transmission channel is a video call media transmission channel between the customer service call terminal and the media server. In this embodiment of this application, for a process of establishing the video call media transmission channel, refer to the descriptions of S206 to S209 in the foregoing embodiment. Details are not described herein again.

S602: The call terminal sends a whiteboard interaction application to the media server. Correspondingly, the media server receives the whiteboard interaction application sent by the call terminal.

The whiteboard interaction application includes an identifier of the peer call terminal, and the identifier is used to apply for whiteboard interaction with the peer call terminal, to present, on a call interface of the call terminal and a call interface of the peer call terminal, a whiteboard picture (for example, a second whiteboard picture) that includes a touch trace of the call terminal and/or a touch trace of the peer call terminal. It may be understood that there may be a plurality of peer call terminals that communicate with the call terminal, and in a process of communicating with the plurality of peer call terminals, the call terminal may apply for whiteboard interaction with one peer call terminal.

Optionally, if a calling party (namely, the call terminal) initiates a video call, after the call terminal selects a manual service based on video prompt content, the media server in a customer service system calls the peer call terminal, and after the peer call terminal answers, the call terminal, the peer call terminal, and the media server establish the video call media transmission channel through interaction. In this case, S601 is first performed, and then S602 is performed.

Optionally, if a calling party initiates a voice call, after the call terminal selects a manual service based on audio prompt content, the media server in a customer service system calls the peer call terminal, and after the peer call terminal answers, the call terminal, the peer call terminal, and the media server establish a voice call media transmission channel through interaction. After the media server receives the whiteboard interaction application, the call terminal, the peer call terminal, and the media server establish the video call media transmission channel through interaction. In this case, S602 is first performed, and then S601 is performed.

S603: The media server sends a whiteboard interaction request to the peer call terminal. Correspondingly, the peer call terminal receives the whiteboard interaction request from the media server.

The whiteboard interaction request is used to request the peer call terminal to perform whiteboard interaction with the call terminal.

S604: The peer call terminal sends a response message for the whiteboard interaction request to the media server. Correspondingly, the media server receives the response message for the whiteboard interaction request from the peer call terminal.

The response message indicates that a second user agrees to perform whiteboard interaction with a first user.

In this embodiment of this application, before the call terminal performs a first touch operation on a first whiteboard picture presented on the call interface of the call terminal, the media server interacts with the call terminal to determine that the call terminal has a resource required for whiteboard interaction (S605 and S606 below). It may be understood that, after the call terminal sends the whiteboard interaction application, a status of the call terminal may change. For example, a current network signal of the call terminal may be poor, or the call terminal is in a 2G/3G network, and bandwidth of the call terminal is insufficient to support the call terminal in performing the first touch operation on the first whiteboard picture; the video call media transmission channel is unavailable; or the user corresponding to the call terminal is inconvenient to perform a touch operation. In these cases, the call terminal does not have the resource required for whiteboard interaction.

S605: The media server sends a SIP message to the call terminal. Correspondingly, the call terminal receives the SIP message from the media server.

The SIP message includes a touch operation determining identifier, and the touch operation determining identifier is used to determine whether the call terminal has the resource required for whiteboard interaction.

S606: The call terminal sends a response message for the SIP message to the media server. Correspondingly, the media server receives the response message for the SIP message from the call terminal.

The response message includes a touch operation answer identifier, and the touch operation answer identifier indicates that the call terminal has the resource required for whiteboard interaction.

In this embodiment of this application, the touch operation determining identifier in the SIP message may be carried in a header field of the SIP message.

Optionally, the first whiteboard interaction request identifier is carried in the header field of the SIP message in the following two manners.

First carrying manner: The touch operation determining identifier (denoted as Whiteboard) is carried in an extension field of Contact of the SIP message.

INVITE sip:02033296999@gd.ctcims.cn SIP/2.0 is used as an example, where
a Contact header field is as follows:
<sip:172.27.10.10:5060;transport=udp;zte-did=26-3-20481-3629-12-890-3302;zte-uid=200001+861892222222;Hpt=8e48_16;CxtId=4;TRC=ffffffff-ffffffff>;audio;video;Whiteboard;+g.3gpp.mid-call;+g.3gpp.srvcc-alerting;+g.3gpp.ps2cs-srvcc-orig-pre-alerting;+g.3gpp.icsi-ref="urn%3Aurn-7%3A3gpp-service.ims.icsi.mmtel";
Max-Forwards: 64.

Second carrying manner: The touch operation determining identifier (Whiteboard) is carried in a Supported extension field of the SIP message.

Supported: 100rel,histinfo,precondition,timer, Whiteboard.

Optionally, when the call initiated by the calling party is a voice call, the SIP message in S605 further includes SDP information of the media server, where the SDP information of the media server includes address information (for example, an IP address), audio port information, an audio encoding/decoding format, video port information, and a video encoding/decoding format of the media server.

When the SIP message includes the SDP information of the media server, the response message for the SIP message further includes SDP information of the call terminal, where the SDP information of the call terminal includes address information (for example, an IP address), audio port information, an audio encoding/decoding format, video port information, and a video encoding/decoding format of the call terminal.

In this embodiment of this application, when the call initiated by the calling party is a voice call, after the media server receives the whiteboard interaction application sent by the call terminal, the media server and the call terminal may perform media resource negotiation based on the SDP information of the media server and the SDP information of the call terminal in the SIP message and the response message for the SIP message in S605 and S606, to establish the first video call media transmission channel between the call terminal and the media server. In this case, in the process in which the call terminal, the peer call terminal, and the media server establish the first video call media transmission channel through interaction in S601, the step in which the media server and the call terminal perform media resource negotiation may be replaced with steps S605 and S606.

Optionally, the media server interacts with the peer call terminal (for example, the media server sends a SIP message to the peer call terminal, where the SIP message includes the SDP information of the media server, and the peer call terminal sends a response message for the SIP message to the media server, where the response message for the SIP message includes SDP information of the peer call terminal), to perform media resource negotiation and establish the second video call media transmission channel between the peer call terminal and the media server.

Optionally, when the SIP message includes the SDP information of the media server, the touch operation determining identifier may further be carried in the SDP information of the media server.

When the SDP information carries the touch operation determining identifier (Whiteboard), information about a video port for transmitting whiteboard media data may further be indicated in an extension field of the SDP information. Specifically, it may be indicated that a video port for transmitting a call video stream is used to transmit the whiteboard media data. The following illustrates fields of the SDP information:
a=sendrecv; indicates a bidirectional video call
a=sendonly/sendrecv; indicates a unidirectional video call
a= Whiteboard; touch operation determining identifier
m=video 12082 RTP/AVP 114 113; indicates that a video port for transmitting a call video stream is used to transmit whiteboard media data.
v=0
o=HuaWeiUAP9600 12 12 IN IP4 10.137.2.167
s=Sip Call
c=IN IP4 10.137.2.176 //IP address
t=0 0
m=audio 12080 RTP/AVP 104 103 102 101 8 0 18 96 97 //audio port number
b=AS:41
b=RS:600
b=RR:2000
a=rtpmap:104 AMR-WB/16000/1 //audio encoding/decoding
a=fmtp: 104 mode-change-capability=2;max-red=0
a=rtpmap:103 AMR-WB/16000/1
a=fmtp:103 octet-align=1;mode-change-capability=2;max-red=0
a=rtpmap:102 AMR/8000/1
a=fmtp: 102 mode-change-capability=2;max-red=0
a=rtpmap:101 AMR/8000/1
a=fmtp:101 octet-align=1;mode-change-capability=2;max-red=0
a=rtpmap:96 telephone-event/16000
a=fmtp:96 0-15
a=rtpmap:97 telephone-event/8000
a=fmtp:97 0-15
a=curr:qos local none
a=curr:qos remote none
a=des:qos mandatory local sendrecv
a=des:qos optional remote sendrecv
a=sendrecv
a=maxptime:240
a=ptime:20
m=video 12082 RTP/AVP 114 113 //video port number
b=AS:2154
b=RS:8000
b=RR:6000
a=rtpmap:114 H264/90000 //video encoding/decoding
a=fmtp:114 profile-level-id=42C01F;sprop-parameter-sets=Z0LAH9oC0ChoBtChNQ==,aM4G4g==;packetization-mode=1;sar-understood= 16;sar-supported= 1
a=imageattr:114 send [x=720,y=1280] recv [x=720,y=1280]
a=rtpmap:113 H264/90000
a=fmtp:113 profile-level-id=42C01F;sprop-parameter-sets=Z0LAH9oC0ChoBtChNQ==,aM4G4g==;packetization-mode=0;sar-understood=16;sar-supported=1
a=imageattr:113 send [x=720,y=1280] recv [x=720,y=1280]
a=curr:qos local none
a=curr:qos remote none
a=des:qos mandatory local sendrecv
a=des:qos optional remote sendrecv
a=rtcp-fb:* nack
a=rtcp-fb:* nack pli
a=rtcp-fb:* ccm fir
a=rtcp-fb:* ccm tmmbr
a=sendrecv
a=Whiteboard
a=tcap:1 RTP/AVPF
a=pcfg:1 t=1
a=extmap: 2 urn:3gpp:video-orientation.

It may be understood that, based on the descriptions of the SDP information, it can be learned that the SDP information may indicate whether the video call is a unidirectional video call or a bidirectional video call. A call terminal and a peer call terminal are as an example, for a unidirectional video call, only a call video stream of the call terminal may be transmitted, and no video stream of the peer call terminal is transmitted. For example, the call terminal sends video content shot by the call terminal to the peer call terminal, and displays the video content shot by the call terminal on the peer call terminal; however, the peer call terminal does not shoot video content or video content shot by the peer call terminal is not sent to the call terminal, in other words, the video content shot by the peer call terminal is not displayed on the call terminal.

S607: The call terminal presents the first whiteboard picture on the call interface based on first whiteboard media data.

The first whiteboard picture is a blank picture. It should be noted that the blank picture is a picture that does not include any touch trace, and does not mean that the picture does not include any information. For example, the blank picture may have a background pattern or a background color.

In this embodiment of this application, the call interface is an interface presented on the call terminal in a process of the video call between the call terminal and the peer call terminal. The call interface may be a call window, a dialog box, or the like. This is not limited in this embodiment of this application.

Optionally, in this embodiment of this application, the first whiteboard media data may be data obtained by the call terminal from the media server, or may be data locally obtained by the call terminal from the call terminal.

In an implementation, the first whiteboard media data includes data corresponding to a first video frame, and the first video frame is received from the media server through the first video call media transmission channel and is used to present the blank picture. In this case, S607 is implemented by using S6071.

S6071: The call terminal decodes the data corresponding to the first video frame to present the first whiteboard picture on the call interface.

In another implementation, the first whiteboard media data includes data corresponding to a whiteboard image, and the whiteboard image is locally stored in the call terminal and is used to present the blank picture. In this case, S607 is implemented by using S6072.

S6072: The call terminal decodes the data corresponding to the whiteboard image to present the first whiteboard picture on the call interface of the call terminal.

S608: The call terminal detects the first touch operation of the first user on the first whiteboard picture, and generates first touch trace data.

The first user is a user corresponding to the call terminal. For example, the first user is a user holding the call terminal. The first touch trace data is used to describe a first touch trace generated by the first touch operation. It may be understood that, in this embodiment of this application, the touch trace is a digital trace or a virtual trace.

In this embodiment of this application, the touch operation may be a tap operation on the first whiteboard picture, or may be a slide operation, such as writing or drawing, on the first whiteboard picture. A specific form of the first touch operation is not limited in this embodiment of this application. Any operation that can generate a trace on the whiteboard picture may be considered as a touch operation.

After the first user performs the touch operation on the first whiteboard picture, a touch trace corresponding to a specific behavior of the touch operation may be formed. For example, if the touch operation is drawing a circle, the touch trace is a circle track. The first touch trace data includes but is not limited to a timestamp, a color, a shape, a location (for example, a location parameter such as coordinates of points on the touch trace), and the like that may indicate the touch trace. For example, a touch trace on a whiteboard picture is a red circle. The first touch trace data includes data indicating the whiteboard picture (for example, a timestamp or identification information of the whiteboard picture), data indicating that a color of the touch trace is red, data indicating that a shape of the touch trace is the circle, and data indicating center coordinates and a radius of the touch trace.

In this embodiment of this application, the call terminal may use a whiteboard tool on the call terminal, and invoke a tool (for example, a paintbrush) in the whiteboard tool to perform a touch. The whiteboard tool is system software preinstalled in the call terminal.

S609: The call terminal sends the first touch trace data to the media server. Correspondingly, the media server receives the first touch trace data from the call terminal.

It may be understood that a transmission channel between the media server and the call terminal may include the foregoing video call media transmission channel and a signaling channel. Optionally, the call terminal may send the first touch trace data to the media server through the signaling channel, or the call terminal may send the first touch trace data to the media server through the foregoing first video call media transmission channel. This is not limited in this embodiment of this application.

It should be noted that, if the first touch trace data is transmitted through the video call media transmission channel, before S609, the media server first sends transmission channel indication information to the call terminal, to indicate to transmit, through the video call media transmission channel, the touch trace data generated in the whiteboard interaction process.

S610: The media server receives second touch trace data from the peer call terminal.

It may be understood that the second touch trace data is data generated by performing, by the second user corresponding to the peer call terminal, a second touch operation on a whiteboard picture that is presented on the call interface of the peer call terminal and that corresponds to the first whiteboard picture, and the second touch trace data is used to describe a second touch trace generated by the second touch operation. In other words, the peer call terminal detects the second touch operation of the second user on the whiteboard picture that is presented on the call interface of the peer call terminal and that corresponds to the first whiteboard picture, and generates the second touch trace data. The whiteboard picture corresponding to the first whiteboard picture is a whiteboard picture presented based on the first whiteboard media data, and the whiteboard picture corresponding to the first whiteboard picture may be the first whiteboard picture.

Similar to S608, before the peer call terminal performs the second touch operation on the whiteboard picture that is presented on the call interface of the call terminal and that corresponds to the first whiteboard picture, the media server interacts with the peer call terminal to determine that the peer call terminal has a resource required for whiteboard interaction. For details, refer to related content in S605 and S606.

Similar to S608, after the peer call terminal generates the second touch trace data, the peer call terminal may send the second touch trace data to the media server through a signaling channel, or the peer call terminal may send the second touch trace data to the media server through the second video call media transmission channel. In addition, if the second touch trace data is transmitted through the video call media transmission channel, before S610, the media server first sends transmission channel indication information to the peer call terminal, to indicate to transmit, through the video call media transmission channel, the touch trace data generated in the whiteboard interaction process.

S611: The media server sends first transmission channel indication information to the call terminal. Correspondingly, the call terminal receives the first transmission channel indication information from the media server.

The first transmission channel indication information indicates the call terminal to receive second whiteboard media data through the first video call media transmission channel.

The second whiteboard media data is data used to present the second whiteboard picture, and the second whiteboard picture includes the first touch trace (to be specific, the touch trace of the first user on the first whiteboard picture) and the second touch trace (to be specific, the touch trace of the second user on the whiteboard picture corresponding to the first whiteboard picture), in other words, the second whiteboard picture may be presented on the call interface of the call terminal based on the second whiteboard media data.

Optionally, the first transmission channel indication information may be carried in a SIP message. The SIP message and the SIP message in S605 may be a same message, or may be different SIP messages. This is not limited in this embodiment of this application.

The media server may indicate, by using the explicit indication method (to be specific, sending the first transmission channel indication information) in S610, to transmit the second whiteboard media data through the video call media transmission channel. In some cases, the media server may alternatively indicate, by using an implicit indication method, to transmit the second whiteboard media data through the video call media transmission channel. For example, the SIP message in S605 carries the SDP information of the media server, and the response message for the SIP message carries the SDP information of the call terminal, to negotiate (or indicate) to transmit the second whiteboard media data through the video call media transmission channel established based on the pair of SDP information (the SDP information of the media server and the SDP of the customer service call terminal). It may be understood that the video call media transmission channel is originally for transmitting a call video stream.

S612: The media server sends the second whiteboard media data to the call terminal through the first video call media transmission channel. Correspondingly, the call terminal receives the second whiteboard media data from the media server through the first video call media transmission channel.

S613: The call terminal presents the second whiteboard picture on the call interface of the call terminal based on the second whiteboard media data.

In this embodiment of this application, after the media server receives the first touch trace data and the second touch trace data, the media server sends the second whiteboard media data to the call terminal based on the data received by the media server. In this way, the first user corresponding to the call terminal can see the touch traces of the first user and the second user on the first whiteboard picture, so that the first user and the second user can effectively interact with each other based on a whiteboard.

In an implementation, the second whiteboard media data includes data corresponding to a second video frame, and the second video frame is used to present the second whiteboard picture into which the first touch trace and the second touch trace are embedded. In this case, S613 specifically includes S6131.

S6131: The call terminal decodes the data corresponding to the second video frame to present the second whiteboard picture on the call interface of the call terminal.

To be specific, after the media server receives the first touch trace data and the second touch trace data, the media server superimposes the first touch trace and the second touch trace to form the second video frame, and then sends the data corresponding to the second video frame (namely, the second whiteboard media data) to the call terminal. The call terminal may present the second whiteboard picture on the call interface of the call terminal by decoding the data corresponding to the second video frame.

In another implementation, the second whiteboard media data is the second touch trace data (the second touch trace data is used to describe the second touch trace). In this case, S613 specifically includes S6132.

S6132: The call terminal presents the first touch trace and the second touch trace on the call interface of the call terminal in a superimposition manner based on the first touch trace data and the second touch trace data, to form the second whiteboard picture.

To be specific, the call terminal receives, from the media server, the second touch trace data generated by the peer call terminal, in other words, after the media server receives the first touch trace data and the second touch trace data, the media server sends the second touch trace data to the call terminal. It should be noted that, in this case, because the first touch trace data is generated by the call terminal and sent to the media server, and a local storage apparatus of the call terminal stores the first touch trace data, the media server does not need to return the first touch trace data to the call terminal.

S614: The media server sends second transmission channel indication information to the peer call terminal. Correspondingly, the peer call terminal receives the second transmission channel indication information from the media server.

The second transmission channel indication information indicates the peer call terminal to receive third whiteboard media data through the second video call media channel. Similar to S611, in this embodiment of this application, an explicit indication method (to be specific, sending the second transmission channel indication information) may be used to indicate to transmit the third whiteboard media data through the video call media transmission channel. In some cases, the media server may alternatively indicate, by using an implicit indication method, to transmit the third whiteboard media data through the video call media transmission channel.

The third whiteboard media data is data used to present the second whiteboard picture on the peer call terminal, in other words, the peer call terminal may present the second whiteboard picture on the call interface of the peer call terminal based on the third whiteboard media data, where the second whiteboard picture includes the first touch trace and the second touch trace.

S615: The media server sends the third whiteboard media data to the peer call terminal through the second video call media transmission channel. Correspondingly, the peer call terminal receives the third whiteboard media data from the media server through the second video call media transmission channel.

S616: The peer call terminal presents the second whiteboard picture on the call interface of the peer call terminal based on the third whiteboard media data.

In this embodiment of this application, after the media server receives the first touch trace data and the second touch trace data, the media server sends the third whiteboard media data to the peer call terminal based on the data received by the media server, to present the second whiteboard picture on the call interface of the peer call terminal. In this way, the second user corresponding to the peer call terminal can see the touch traces of the second user and the first user on the whiteboard picture, so that the first user and the second user can effectively interact with each other based on the whiteboard.

Optionally, in this embodiment of this application, the second whiteboard media data may be the same as or different from the third whiteboard media data.

In an implementation, the third whiteboard media data is the same as the second whiteboard media data, the second whiteboard media data or the third whiteboard media data includes the data corresponding to the second video frame, and the second video frame is used to present the second whiteboard picture into which the first touch trace and the second touch trace are embedded. In this case, the peer call terminal decodes the data corresponding to the second video frame to present the second whiteboard picture on the call interface of the peer call terminal.

In another implementation, the third whiteboard media data is different from the second whiteboard media data, the foregoing second whiteboard data and third whiteboard data are all the second touch trace data, and the third whiteboard media data is the first touch trace data. In this case, the peer call terminal presents the first touch trace and the second touch trace on the call interface of the peer call terminal in a superimposition manner based on the first touch trace data and the second touch trace data, to form the second whiteboard picture. It should be noted that, because the second touch trace data is generated by the peer call terminal and sent to the media server, and a local storage apparatus of the peer call terminal stores the second touch trace data, the media server does not need to return the second touch trace data to the peer call terminal.

In conclusion, the media server aggregates touch trace data of each call terminal, and then distributes, to each call terminal participating in whiteboard interaction, touch trace data of another call terminal (the another call terminal is a call terminal other than the call terminal), so that each call terminal can obtain the touch trace data of the another terminal, and a whiteboard picture including the touch traces of all the call terminals participating in the whiteboard interaction is presented on a call interface of each call terminal.

Optionally, as shown in FIG. 6A and FIG. 6B, before sending the second whiteboard media data to the call terminal through the first video call media transmission channel (that is, S612), the communication method provided in this embodiment of this application further includes S617.

S617: Stop transmitting the call video stream through the first video call media transmission channel.

In this embodiment of this application, when the second whiteboard media data is transmitted through the first video call media transmission channel, the call terminal and the media server may stop transmitting, through the first video call media transmission channel, the video content shot by (that is, the call video stream of) the call terminal or the peer call terminal.

Optionally, as shown in FIG. 6A and FIG. 6B, before sending the third whiteboard media data to the peer call terminal through the second video call media transmission channel (that is, S615), the communication method provided in this embodiment of this application further includes S618.

S618: Stop transmitting the call video stream through the second video call media transmission channel.

In this embodiment of this application, when the third whiteboard media data is transmitted through the second video call media transmission channel, the peer call terminal and the media server may stop transmitting, through the second video call media transmission channel, the video content shot by (that is, the call video stream of) the call terminal or the peer call terminal.

In this embodiment of this application, the media server is used as a transmission medium between the call terminal and the peer call terminal. In an implementation, the media server may further perform hybrid encoding processing (which may be referred to as mixed screen processing) on the video content shot by the call terminal and the data corresponding to the second video frame that is generated by the media server and that is used to present the second whiteboard picture, and then send a video stream obtained through the mixed screen processing to the peer call terminal; or perform hybrid encoding processing on the video content shot by the peer call terminal and the data corresponding to the second video frame that is generated by the media server and that is used to present the second whiteboard picture, and then send a video stream obtained through the mixed screen processing to the call terminal. In this way, a picture obtained through the mixed screen processing on the second whiteboard picture and the content shot by the call terminal or the peer call terminal may be displayed on the call terminal and the peer call terminal. For example, a picture captured by the call terminal is displayed in a first area of the call interface of the peer call terminal, and the second whiteboard picture is displayed in a second area of the call interface of the peer call terminal.

It may be understood that, in this embodiment of this application, the call terminal or the peer call terminal may alternatively cancel the whiteboard interaction, and resume the original voice or video call. For example, the call terminal closes the whiteboard tool on the call terminal, and the call terminal sends a whiteboard interaction end notification message to the media server, to notify the media server that a whiteboard interaction process ends. In this way, subsequently, the voice or video call is resumed between the call terminal, the media server, and the peer call terminal, to be specific, the video call media transmission channel is not used for transmitting whiteboard media data, and an original function of the video call media transmission channel is resumed, that is, the video call video stream is transmitted through the video call media transmission channel.

In conclusion, according to the communication method provided in this embodiment of this application, the communication method may be applied to a process of a call between terminals. A call terminal, a media server, and a peer call terminal in a communication system establish a video call media transmission channel through interaction, and a call video stream between the call terminal and the peer call terminal is transmitted through the video call media transmission channel, so as to implement a video call service between the call terminal and the peer call terminal, where the call video stream includes video content shot by the call terminal or the peer call terminal. Then, the call terminal presents a first whiteboard picture on a call interface of the call terminal based on first whiteboard media data, where the first whiteboard picture is a blank picture; detects a first touch operation of a first user corresponding to the call terminal on the first whiteboard picture, and generates first touch trace data used to describe a first touch trace generated by the first touch operation; sends the first touch trace data to the media server; and the media server receives second touch trace data from the peer call terminal, where the second touch trace data is data generated by performing, by a second user corresponding to the peer call terminal, a second touch operation on a whiteboard picture that is presented on a call interface of the peer call terminal and that corresponds to the first whiteboard picture, and the second touch trace data is used to describe a second touch trace generated by the second touch operation. Further, the call terminal receives second whiteboard media data from the media server through the video call media transmission channel, and presents a second whiteboard picture on the call interface based on the second whiteboard media data, where the second whiteboard picture includes the first touch trace and the second touch trace. The media server sends third whiteboard media data to the peer call terminal through the video call media transmission channel, so that the peer call terminal presents the second whiteboard picture on the call interface of the peer call terminal based on the third whiteboard media data. According to the technical solution provided in embodiments of this application, the call terminal, the media server, and the peer call terminal may transmit the whiteboard media data based on the existing video call media transmission channel, without spending extra time to establish a transmission channel dedicated to transmitting the whiteboard media data, and without occupying additional port resources of the call terminal.

Further, in comparison with an existing communication method, in the technical solution provided in this embodiment of this application, no whiteboard APP needs to be installed on a user call terminal and a customer service call terminal. In this way, an operator does not need to perform a complex related operation, and the operator does not need to have high operation skills.

It may be understood that, in a service scenario of a human customer service, a call terminal and a peer call terminal may be terminals of different roles. For example, the call terminal may be a customer service call terminal, and the peer call terminal may be a user call terminal; or the call terminal is a user call terminal, and the peer call terminal is a customer service call terminal. In addition, based on the related descriptions of the foregoing embodiment, it can be learned that the user call terminal that initiates a call may initiate a video call, or may initiate a voice call.

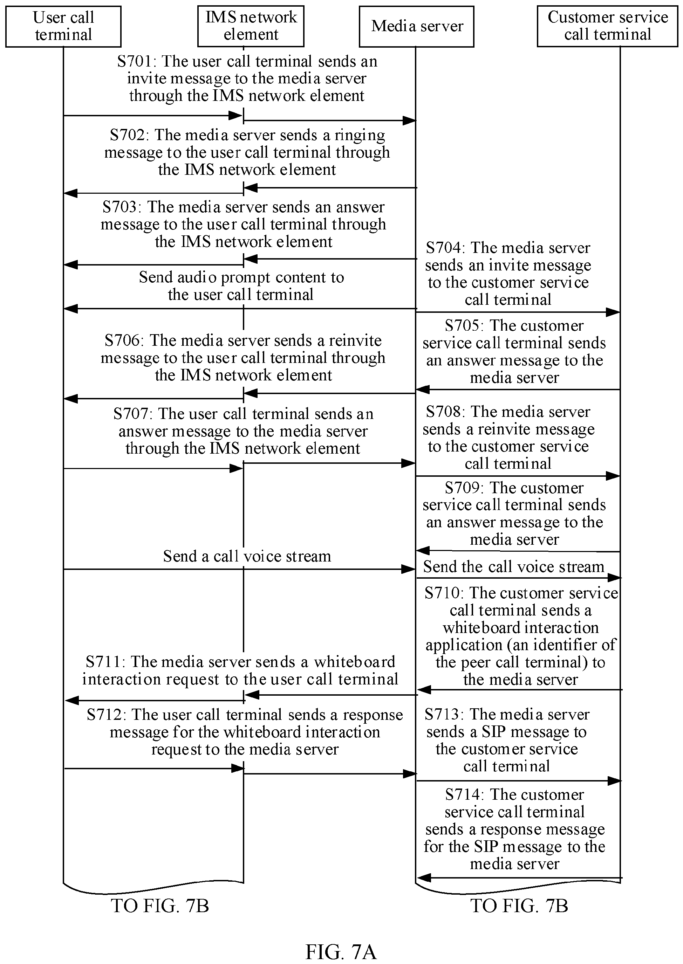

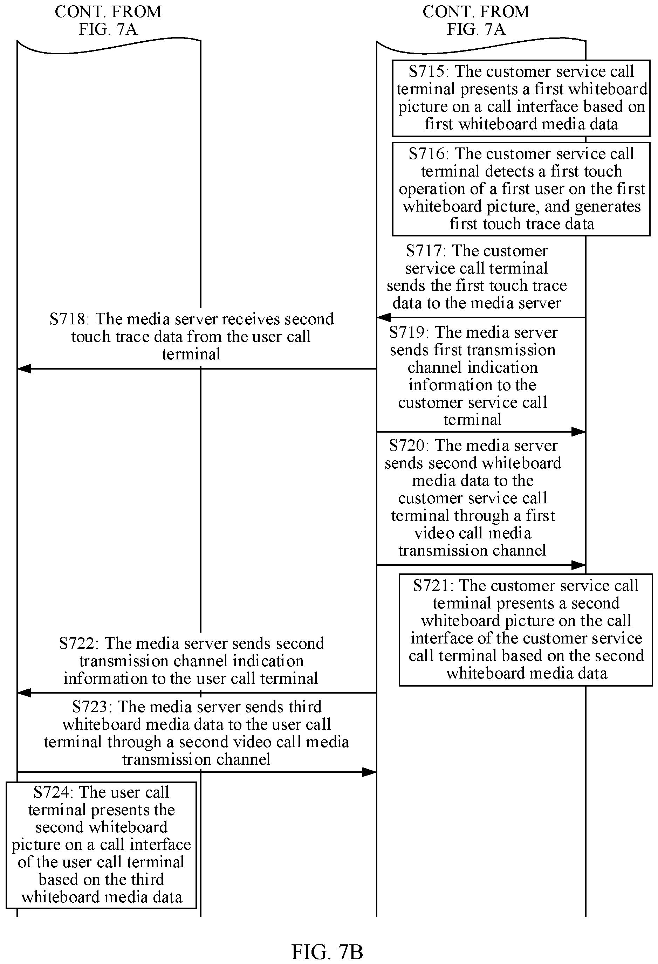

Based on the related descriptions of the foregoing embodiment, it can be learned that the user call terminal that initiates a call may initiate a video call, or may initiate a voice call. The following describes in detail the communication method provided in embodiments of this application from a perspective of interaction between devices by using an example in which the call terminal is a customer service call terminal, the peer call terminal is a user call terminal, and a call initiated by the user call terminal is a voice call. As shown in FIG. 7A and FIG. 7B, a communication method according to an embodiment of this application may include the following steps.

S701: A user call terminal sends an invite (invite) message to a media server through an IMS network element.

S702: The media server sends a ringing message to the user call terminal through the IMS network element.

S703: The media server sends an answer message to the user call terminal through the IMS network element.

It may be understood that, after a customer service system answers a call of the user call terminal, the media server plays audio prompt content related to a service of a user, to prompt the user to select different service content (for example, select a manual service) as required. When the user performs an operation based on the prompt of the audio prompt content and selects the manual service, after the media server detects the operation of selecting the manual service, the media server allocates one customer service person to the user (to be specific, selects a corresponding customer service call terminal for the user call terminal).

S704: The media server sends an invite (invite) message to the customer service call terminal.

S705: The customer service call terminal sends an answer message to the media server.

S706: The media server sends a reinvite (reinvite) message to the user call terminal through the IMS network element.

The reinvite (reinvite) message includes SDP information of the media server, where the SDP information of the media server includes address information (for example, an IP address), audio port information, and an audio encoding/decoding format of the media server.

S707: The user call terminal sends an answer message to the media server through the IMS network element.

The answer message includes SDP information of the user call terminal, and the SDP information of the user call terminal includes address information (for example, an IP address), audio port information, and an audio encoding/decoding format of the user call terminal.

S708: The media server sends a reinvite (reinvite) message to the customer service call terminal.

The reinvite (reinvite) message includes the SDP information of the media server. For descriptions of the SDP information of the media server, refer to S706.

S709: The customer service call terminal sends an answer message to the media server.

The answer message includes SDP information of the customer service call terminal, and the SDP information of the customer service call terminal includes address information (for example, an IP address), audio port information, and an audio encoding/decoding format of the customer service call terminal.

S706 to S709 are a process in which the call terminal, the peer call terminal, and the media server establish an indirect voice call media transmission channel between the user call terminal and the customer service call terminal through interaction and media resource negotiation.

It may be understood that, S701 to S709 are a process in which the user call terminal calls the customer service call terminal and establishes the voice call media transmission channel. For content carried in the messages in steps S701 to S709, refer to the foregoing detailed descriptions of S201 to S209. Details are not described herein again.

S710: The customer service call terminal sends a whiteboard interaction application to the media server. Correspondingly, the media server receives the whiteboard interaction application sent by the customer service call terminal.

The whiteboard interaction application includes an identifier of the peer call terminal, and the identifier is used to apply for whiteboard interaction with the peer call terminal, to present, on a call interface of the call terminal and a call interface of the peer call terminal, a whiteboard picture (namely, a second whiteboard picture) that includes a touch trace of the call terminal and/or a touch trace of the peer call terminal.

S711: The media server sends a whiteboard interaction request to the user call terminal. Correspondingly, the user call terminal receives the whiteboard interaction request from the media server.

The whiteboard interaction request is used to request the peer call terminal to perform whiteboard interaction with the user corresponding to the call terminal.

S712: The user call terminal sends a response message for the whiteboard interaction request to the media server. Correspondingly, the media server receives the response message for the whiteboard interaction request from the user call terminal.

The response message indicates that the user corresponding to the user call terminal agrees to perform whiteboard interaction with the user corresponding to the call terminal.

It should be noted that, the user call terminal initiates a voice call, and the voice call media transmission channel is established by using steps S706 to S709 in the foregoing embodiment. Whiteboard media data needs to be transmitted in a whiteboard interaction process (it may be understood that the whiteboard media data is used to present a whiteboard picture, and the whiteboard picture belongs to a video stream). However, in the voice call process, only a call voice stream can be transmitted, but no video stream can be transmitted. Therefore, after the media server receives the whiteboard interaction application, the media server triggers establishment of a video call media transmission channel, to be specific, establish the video call media transmission channel that can transmit the video stream because the voice call needs to be converted into a video call, and transmit the whiteboard media data through the video call media transmission channel.

It can be understood that, the video call media transmission channel includes a video call media transmission channel (corresponding to the second video call media transmission channel in the foregoing embodiment) between the user call terminal and the media server, and a video call media transmission channel (corresponding to the first video call media transmission channel in the foregoing embodiment) between the customer service call terminal and the media server, where the first video call media transmission channel and the second video call media transmission channel exist in pairs, and are transmission channels used for communication between the customer service call terminal and the user call terminal.

In this embodiment of this application, S711 may be a reinvite message, where the message carries SDP information of the media server (the SDP information of the media server includes the address information, the audio port information, the audio encoding/decoding format, video port information, and a video encoding/decoding format of the media server), and S712 is a response message for the reinvite message, where the response message carries SDP information of the user call terminal (the SDP information of the user call terminal includes the address information (for example, the IP address), the audio port information, the audio encoding/decoding format, video port information, and a video encoding/decoding format) of the user call terminal. In this way, media resource negotiation is performed by using the SDP information of the media server in the reinvite message and the SDP information of the user call terminal in the response message, to establish the second video call media transmission channel between the user call terminal and the media server.

A process of establishing the first video call media transmission channel is as follows: S713 and S714.

S713: The media server sends a SIP message to the customer service call terminal. Correspondingly, the customer service call terminal receives the SIP message from the media server.

The SIP message includes a touch operation determining identifier, and the touch operation determining identifier is used to determine whether the call terminal has a resource required for whiteboard interaction.

The SDP information of the media server includes the address information, the audio port information, the audio encoding/decoding format, the video port information, and the video encoding/decoding format of the media server. It should be noted that, different from SDP information (including address information, audio port information, and an audio encoding/decoding format) of a device in a media resource negotiation message in a voice call scenario, SDP information in a media resource negotiation message in a video call scenario further includes video port information and a video encoding/decoding format of the device.

S714: The customer service call terminal sends a response message for the SIP message to the media server. Correspondingly, the media server receives the response message for the SIP message from the customer service call terminal.

The response message includes a touch operation answer identifier and SDP information of the customer service call terminal, where the touch operation answer identifier indicates that the call terminal has the resource required for whiteboard interaction, and the SDP information of the customer service call terminal includes the address information, the audio port information, the audio encoding/decoding format, video port information, and a video encoding/decoding format of the customer service call terminal.

The SDP information of the media server in the SIP message and the SDP information of the customer service call terminal in the response message for the SIP message are used for media resource negotiation, to establish the first video call media transmission channel between the media server and the customer service call terminal.

S715: The customer service call terminal presents a first whiteboard picture on the call interface based on first whiteboard media data, where the first whiteboard picture is a blank picture.

S716: The customer service call terminal detects a first touch operation of a first user on the first whiteboard picture, and generates first touch trace data.

The first touch trace data is used to describe a first touch trace generated by the first touch operation.

S717: The customer service call terminal sends the first touch trace data to the media server. Correspondingly, the media server receives the first touch trace data from the customer service call terminal.

S718: The media server receives second touch trace data from the user call terminal.

The second touch trace data is data generated by performing, by a second user corresponding to the peer call terminal, a second touch operation on a whiteboard picture that is presented on the call interface of the peer call terminal and that corresponds to the first whiteboard picture, and the second touch trace data is used to describe a second touch trace generated by the second touch operation.

S719: The media server sends first transmission channel indication information to the customer service call terminal. Correspondingly, the customer service call terminal receives the first transmission channel indication information from the media server.

The first transmission channel indication information indicates the customer service call terminal to receive second whiteboard media data through the first video call media transmission channel, and the second whiteboard picture may be presented on the call interface of the customer service call terminal based on the second whiteboard media data, where the second whiteboard picture includes the first touch trace and the second touch trace.

S720: The media server sends the second whiteboard media data to the customer service call terminal through the first video call media transmission channel. Correspondingly, the customer service call terminal receives the second whiteboard media data from the media server through the first video call media transmission channel.

S721: The customer service call terminal presents the second whiteboard picture on the call interface of the customer service call terminal based on the second whiteboard media data.

S722: The media server sends second transmission channel indication information to the user call terminal. Correspondingly, the user call terminal receives the second transmission channel indication information from the media server.

The second transmission channel indication information indicates the user call terminal to receive third whiteboard media data through the second video call media channel, and the second whiteboard picture may be presented on the call interface of the user call terminal based on the third whiteboard media data, where the second whiteboard picture includes the first touch trace and the second touch trace.

S723: The media server sends the third whiteboard media data to the user call terminal through the second video call media transmission channel. Correspondingly, the user call terminal receives the third whiteboard media data from the media server through the second video call media transmission channel.

S724: The user call terminal presents the second whiteboard picture on the call interface of the user call terminal based on the third whiteboard media data.

For descriptions of other details of S701 to S724, refer to the related descriptions in the foregoing embodiment. Details are not described herein again.

Correspondingly, embodiments of this application provide a call terminal. The call terminal may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in embodiments of the present invention, module division is an example, and is merely a logical function division. During actual implementation, another division manner may be used.

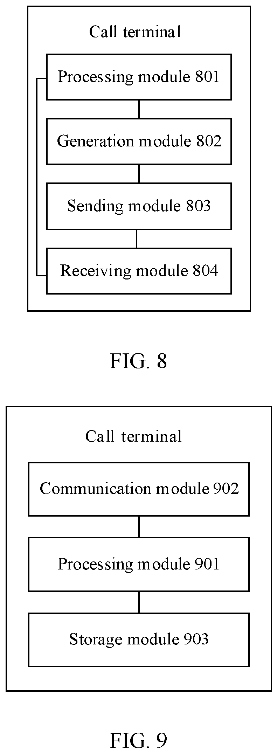

When each functional module is obtained through division based on each corresponding function, FIG. 8 is a schematic diagram of a possible structure of the call terminal in the foregoing embodiments. As shown in FIG. 8, the call terminal includes a processing module 801, a generation module 802, a sending module 803, and a receiving module 804. The processing module 801 is configured to establish a video call media transmission channel to a media server, so that the sending module 803 or the receiving module 804 transmits a call video stream between the call terminal and a peer call terminal through the video call media transmission channel, to implement a video call service between the call terminal and the peer call terminal, for example, perform S601 in the foregoing method embodiment. The processing module 801 is further configured to present a first whiteboard picture on a call interface based on first whiteboard media data, where the first whiteboard picture is a blank picture, for example, perform S607 and S715 in the foregoing method embodiments. The generation module 802 is configured to: detect a first touch operation of a first user on the first whiteboard picture, and generate first touch trace data, where the first touch trace data is used to describe a first touch trace generated by the first touch operation, for example, perform S608 and S716 in the foregoing method embodiments; and the sending module 803 is configured to send the first touch trace data to the media server, for example, perform S609 and S717 in the foregoing method embodiments. The receiving module 804 is configured to receive second whiteboard media data from the media server through the video call media transmission channel, for example, perform S612 and S720 in the foregoing method embodiments. The processing module 801 is further configured to present a second whiteboard picture on the call interface of the call terminal based on the second whiteboard media data, where the second whiteboard picture includes the first touch trace and a second touch trace, and the second touch trace is a touch trace generated by performing, by a second user, a second touch operation on a whiteboard picture that is presented on a call interface of the peer call terminal and that corresponds to the first whiteboard picture, for example, perform S613 and S721 in the foregoing method embodiments.

Optionally, the first whiteboard media data includes data corresponding to a first video frame, and the first video frame is received from the media server through the video call media transmission channel and is used to present the blank picture; and the processing module 801 is specifically configured to decode the data corresponding to the first video frame to present the first whiteboard picture on the call interface, for example, perform S6071 in the foregoing method embodiment.

Optionally, the first whiteboard media data includes data corresponding to a whiteboard image, and the whiteboard image is locally stored in the call terminal and is used to present the blank picture; and the processing module 801 is specifically configured to decode the data corresponding to the whiteboard image to present the first whiteboard picture on the call interface, for example, perform S6072 in the foregoing method embodiment.

Optionally, the second whiteboard media data includes data corresponding to a second video frame, the second video frame is used to present the second whiteboard picture into which the first touch trace and the second touch trace are embedded; and the processing module 801 is specifically configured to decode the data corresponding to the second video frame to present the second whiteboard picture on the call interface, for example, perform S6131 in the foregoing method embodiment.

Optionally, the second whiteboard media data is second touch trace data, and the second touch trace data is used to describe the second touch trace; and the processing module 801 is specifically configured to present the first touch trace and the second touch trace on the call interface in a superimposition manner based on the first touch trace data and the second touch trace data, to form the second whiteboard picture, for example, perform S6132 in the foregoing method embodiment.

Optionally, the receiving module 804 is further configured to receive transmission channel indication information from the media server, where the transmission channel indication information indicates the call terminal to receive the second whiteboard media data through the video call media transmission channel, for example, perform S611 and S719 in the foregoing method embodiments.

Optionally, the processing module 801 is further configured to control the sending module 803 or the receiving module 804 to stop transmitting the call video stream through the video call media transmission channel, for example, perform S617 in the foregoing method embodiment.

Optionally, the sending module 803 is further configured to send a whiteboard interaction application to the media server, where the whiteboard interaction application includes an identifier of the peer call terminal, and the identifier is used to apply for whiteboard interaction with the peer call terminal, to present the second whiteboard picture on the call terminal, for example, perform S602 and S710 in the foregoing method embodiments.

Optionally, the receiving module 804 is further configured to receive a SIP message from the media server, where the SIP message includes a touch operation determining identifier, and the touch operation determining identifier is used to determine whether the call terminal has a resource required for whiteboard interaction, for example, perform S605 and S713 in the foregoing method embodiments; and the sending module 803 is further configured to send a response message for the SIP message to the media server, where the response message includes a touch operation answer identifier, and the touch operation answer identifier indicates that the call terminal has the resource required for whiteboard interaction, for example, perform S606 and S714 in the foregoing method embodiments.

The modules of the foregoing call terminal may further be configured to perform other actions in the foregoing method embodiments. All related content of each step in the foregoing method embodiments may be cited for function descriptions of corresponding functional modules. Details are not described herein again.

When an integrated unit is used, FIG. 9 is a schematic diagram of another possible structure of the call terminal in the foregoing embodiments. As shown in FIG. 9, the call terminal provided in this embodiment of this application may include a processing module 901 and a communication module 902. The processing module 901 may be configured to: control and manage an action of the call terminal. For example, the processing module 901 may be configured to support the call terminal in performing S601, S607 (including S607 or S6072), S608, S613 (including S6131 or S6132), S617, S715, S716, and S721 in the foregoing method embodiments; and/or another process of the technology described in this specification. The communication module 902 may be configured to support the call terminal in communicating with another network entity. The communication module 902 integrates functions of the sending module 803 and the receiving module 804. The communication module 902 may be configured to support the call terminal in performing S602, S605, S606, S609, S611, S612, S710, S713, S714, S717, S719, and S720 in the foregoing method embodiments. Optionally, as shown in FIG. 9, the call terminal may further include a storage module 903, configured to store program code and data of the call terminal, for example, received video content and touch trace data.

The processing module 901 may be a processor. For example, the processor may be the processor 410 in FIG. 4A. The communication module 902 may be a transceiver, a transceiver circuit, a communication interface, or the like, for example, the mobile communication module 450 and/or the wireless communication module 460 in FIG. 4A. The storage module 903 may be a memory, for example, the internal memory 421 in FIG. 4A.

For more details about the modules included in the call terminal for implementing the foregoing functions, refer to the descriptions in the foregoing method embodiments. Details are not described herein again.

Correspondingly, embodiments of this application provide a media server. The media server may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in embodiments of the present invention, module division is an example, and is merely a logical function division. During actual implementation, another division manner may be used.

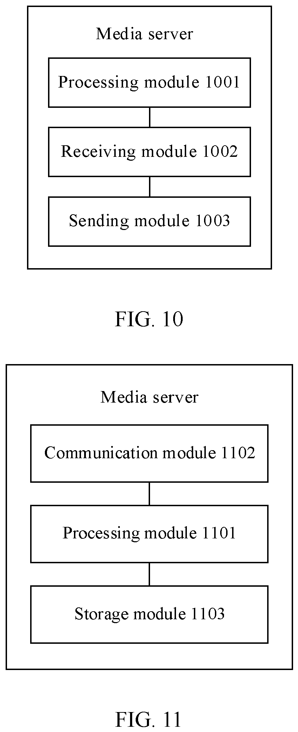

When each functional module is obtained through division based on each corresponding function, FIG. 10 is a schematic diagram of a possible structure of the media server in the foregoing embodiments. As shown in FIG. 10, the media server includes a processing module 1001, a receiving module 1002, and a sending module 1003. The processing module 1001 is configured to: establish a first video call media transmission channel and a second video call media transmission channel, where the first video call media transmission channel is a video call media transmission channel between the media server and a call terminal, and the second video call media transmission channel is a video call media transmission channel between the media server and a peer call terminal; and control the receiving module 1002 or the sending module 1003 to transmit a call video stream between the call terminal and the peer call terminal through the first video call media transmission channel and the second video call media transmission channel, to implement a video call service between the call terminal and the peer call terminal, where the call video stream includes video content shot by the call terminal or the peer call terminal, for example, perform S601 in the foregoing method embodiment. The receiving module 1002 is configured to receive first touch trace data from the call terminal, where the first touch trace data is data generated by performing, by a first user, a first touch operation on a first whiteboard picture presented on a call interface of the call terminal, the first whiteboard picture is a blank picture, the first whiteboard picture is a whiteboard picture presented based on first whiteboard media data, and the first touch trace data is used to describe a first touch trace generated by the first touch operation, for example, perform S609 and S717 in the foregoing method embodiments. The receiving module 1002 is further configured to receive second touch trace data from the peer call terminal, where the second touch trace data is data generated by performing, by a second user, a second touch operation on a whiteboard picture that is presented on a call interface of the peer call terminal and that corresponds to the first whiteboard picture, and the second touch trace data is used to describe a second touch trace generated by the second touch operation, for example, perform S610 and S718 in the foregoing method embodiments. The sending module 1003 is configured to send second whiteboard media data to the call terminal through the first video call media transmission channel, to present a second whiteboard picture on the call interface of the call terminal, where the second whiteboard picture includes the first touch trace and the second touch trace, for example, perform S612 and S720 in the foregoing method embodiments. The sending module 1003 is further configured to send third whiteboard media data to the peer call terminal through the second video call media transmission channel, to present the second whiteboard picture on the call interface of the peer call terminal, for example, perform S615 and S723 in the foregoing method embodiments.

Optionally, the sending module 1003 is further configured to send first transmission channel indication information to the call terminal, where the first transmission channel indication information indicates the call terminal to receive the second whiteboard media data through the first video call media channel, for example, perform S611 and S719 in the foregoing method embodiments. The sending module 1003 is further configured to send second transmission channel indication information to the peer call terminal, where the second transmission channel indication information indicates the peer call terminal to receive the third whiteboard media data through the second video call media channel, for example, perform S614 and S722 in the foregoing method embodiments.

Optionally, the processing module 1001 is further configured to control the sending module 1003 or the receiving module 1002 to stop transmitting the call video stream through the first video call media transmission channel, for example, perform S617 in the foregoing method embodiment. The processing module 1001 is further configured to control the sending module 1003 or the receiving module 1002 to stop transmitting the call video stream through the second video call media transmission channel, for example, perform S618 in the foregoing method embodiment.

Optionally, the sending module 1003 is further configured to send a SIP message to the call terminal, where the SIP message includes a touch operation determining identifier, and the touch operation determining identifier is used to determine whether the call terminal has a resource required for whiteboard interaction, for example, perform S605 and S713 in the foregoing method embodiments; and the receiving module 1002 is further configured to receive a response message for the SIP message from the call terminal, where the response message includes a touch operation answer identifier, and the touch operation answer identifier indicates that the call terminal has the resource required for whiteboard interaction, for example, perform S606 and S714 in the foregoing method embodiments.

Optionally, the receiving module 1002 is further configured to receive a whiteboard interaction application from the call terminal, where the whiteboard interaction application includes an identifier of the peer call terminal, and the identifier is used to apply for whiteboard interaction with the peer call terminal, to present a whiteboard picture including a touch trace of the call terminal and/or a touch trace of the peer call terminal on the call interface of the call terminal and the call interface of the peer call terminal, for example, perform S602 and S710 in the foregoing method embodiments.

Optionally, the sending module 1003 is further configured to send a whiteboard interaction request to the peer call terminal, where the whiteboard interaction request is used to request the peer call terminal to perform whiteboard interaction with the call terminal, for example, perform S603 and S711 in the foregoing method embodiments; and the receiving module 1002 is further configured to receive a response message for the whiteboard interaction request from the peer call terminal, where the response message indicates that the second user agrees to perform whiteboard interaction with the first user, for example, perform S604 and S712 in the foregoing method embodiments.

The modules of the foregoing media server may further be configured to perform other actions in the foregoing method embodiments. All related content of each step in the foregoing method embodiments may be cited for function descriptions of corresponding functional modules. Details are not described herein again.

When an integrated unit is used, FIG. 11 is a schematic diagram of a possible structure of the media server in the foregoing embodiment. As shown in FIG. 11, the media server provided in this embodiment of this application may include a processing module 1101 and a communication module 1102. The processing module 1101 may be configured to: control and manage an action of the media server. For example, the processing module 1101 may be configured to support the media server in performing S601, S617, and S618 in the foregoing method embodiments; and/or another process of the technology described in this specification. The communication module 1102 may be configured to support the media server in communicating with another network entity. The communication module 1102 integrates functions of the receiving module 1002 and the sending module 1003. The communication module 1102 may be configured to support the media server in performing S602, S603, S604, S605, S606, S710, S609, S610, S611, S612, S614, S615, S711, S712, S713, S714, S717, S718, S719, S720, S722, and S723 in the foregoing method embodiments. Optionally, as shown in FIG. 11, the media server may further include a storage module 1103, configured to store program code and data of the media server.

The processing module 1101 may be a processor. For example, the processor may be the processor 501 in FIG. 5. The communication module 1102 may be a transceiver, a transceiver circuit, a network interface, or the like, for example, the network interface 503 in FIG. 5. The storage module 1103 may be a memory, for example, the memory 502 in FIG. 5.

For more details about the modules included in the media server for implementing the foregoing functions, refer to the descriptions in the foregoing method embodiments. Details are not described herein again.

Embodiments in this specification are all described in a progressive manner, for same or similar parts in embodiments, reference may be made to these embodiments, and each embodiment focuses on a difference from other embodiments.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid state drive (solid state drive, SSD)), or the like.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the division into the modules or units is merely logical function division and may be other division in actual implementation. For example, a plurality of units or assemblies may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method is performed by a call terminal, and the method comprises:
establishing a video call media transmission channel between the call terminal and a media server, and transmitting a call video stream between the call terminal and a peer call terminal through the video call media transmission channel, to implement a video call service between the call terminal and the peer call terminal;
presenting a first whiteboard picture on a call interface based on first whiteboard media data, wherein the first whiteboard picture is a blank picture;
detecting a first touch operation of a first user on the first whiteboard picture, and generating first touch trace data, wherein the first touch trace data is used to describe a first touch trace generated by the first touch operation;
sending the first touch trace data to the media server; and
receiving second whiteboard media data from the media server through the video call media transmission channel, and presenting a second whiteboard picture on the call interface based on the second whiteboard media data, wherein the second whiteboard picture comprises the first touch trace and a second touch trace, and the second touch trace is a touch trace generated by performing, by a second user, a second touch operation on a whiteboard picture that is presented on a call interface of the peer call terminal and that corresponds to the first whiteboard picture.

2. The method according to claim 1, wherein
the first whiteboard media data comprises data corresponding to a first video frame, and the first video frame is received from the media server through the video call media transmission channel and is used to present the blank picture; and the presenting a first whiteboard picture on a call interface based on first whiteboard media data comprises: decoding the data corresponding to the first video frame to present the first whiteboard picture on the call interface; or
the first whiteboard media data comprises data corresponding to a whiteboard image, and the whiteboard image is locally stored in the call terminal and is used to present the blank picture; and the presenting a first whiteboard picture based on first whiteboard media data comprises: decoding the data corresponding to the whiteboard image to present the first whiteboard picture on the call interface.

3. The method according to claim 1 or 2, wherein
the second whiteboard media data comprises data corresponding to a second video frame, and the second video frame is used to present a second whiteboard picture into which the first touch trace and the second touch trace are embedded; and the presenting a second whiteboard picture on the call interface based on the second whiteboard media data comprises: decoding the data corresponding to the second video frame to present the second whiteboard picture on the call interface; or
the second whiteboard media data is second touch trace data, and the second touch trace data is used to describe the second touch trace; and the presenting a second whiteboard picture on the call interface based on the second whiteboard media data comprises: presenting the first touch trace and the second touch trace on the call interface in a superimposition manner based on the first touch trace data and the second touch trace data, to form the second whiteboard picture.

4. The method according to any one of claims 1 to 3, wherein the method further comprises:
receiving transmission channel indication information from the media server, wherein the transmission channel indication information indicates the call terminal to receive the second whiteboard media data through the video call media transmission channel.

5. The method according to any one of claims 1 to 4, wherein the method further comprises:
stopping transmitting the call video stream through the video call media transmission channel.

6. The method according to any one of claims 1 to 5, wherein the method further comprises:
sending a whiteboard interaction application to the media server, wherein the whiteboard interaction application comprises an identifier of the peer call terminal, and the identifier is used to apply for whiteboard interaction with the peer call terminal, to present the second whiteboard picture on the call terminal.

7. The method according to any one of claims 1 to 6, wherein the method further comprises:
determining that the call terminal has a resource required for whiteboard interaction.

8. The method according to claim 7, wherein the determining that the call terminal has a resource required for whiteboard interaction comprises:
receiving a session initiation protocol SIP message from the media server, wherein the SIP message comprises a touch operation determining identifier, and the touch operation determining identifier is used to determine whether the call terminal has the resource required for whiteboard interaction; and
sending a response message for the SIP message to the media server, wherein the response message comprises a touch operation answer identifier, and the touch operation answer identifier indicates that the call terminal has the resource required for whiteboard interaction.

9. A communication method, wherein the method is performed by a media server, and the method comprises:
establishing a first video call media transmission channel and a second video call media transmission channel, wherein the first video call media transmission channel is a video call media transmission channel between a call terminal and the media server, and the second video call media transmission channel is a video call media transmission channel between the media server and a peer call terminal; and transmitting a call video stream between the call terminal and the peer call terminal through the first video call media transmission channel and the second video call media transmission channel, to implement a video call service between the call terminal and the peer call terminal;
receiving first touch trace data from the call terminal, wherein the first touch trace data is data generated by performing, by a first user, a first touch operation on a first whiteboard picture presented on a call interface of the call terminal, the first whiteboard picture is a blank picture, the first whiteboard picture is a whiteboard picture presented based on first whiteboard media data, and the first touch trace data is used to describe a first touch trace generated by the first touch operation;
receiving second touch trace data from the peer call terminal, wherein the second touch trace data is data generated by performing, by a second user, a second touch operation on a whiteboard picture that is presented on a call interface of the peer call terminal and that corresponds to the first whiteboard picture, and the second touch trace data is used to describe a second touch trace generated by the second touch operation;
sending second whiteboard media data to the call terminal through the first video call media transmission channel, to present a second whiteboard picture on the call interface of the call terminal, wherein the second whiteboard picture comprises the first touch trace and the second touch trace; and
sending third whiteboard media data to the peer call terminal through the second video call media transmission channel, to present the second whiteboard picture on the call interface of the peer call terminal.

10. The method according to claim 9, wherein
the first whiteboard media data comprises data corresponding to a first video frame, wherein the first video frame is received from the media server through the first video call media transmission channel and is used to present the blank picture; or
the first whiteboard media data comprises data corresponding to a whiteboard image, and the whiteboard image is locally stored in the call terminal and is used to present the blank picture.

11. The method according to claim 9 or 10, wherein
the second whiteboard media data is the same as the third whiteboard media data, the second whiteboard media data or the third whiteboard media data comprises data corresponding to a second video frame, and the second video frame is used to present a second whiteboard picture into which the first touch trace and the second touch trace are embedded; or
the second whiteboard media data is different from the third whiteboard media data, the second whiteboard media data is the second touch trace data, and the third whiteboard media data is the first touch trace data.

12. The method according to any one of claims 9 to 11, wherein the method further comprises:
sending first transmission channel indication information to the call terminal, wherein the first transmission channel indication information indicates the call terminal to receive the second whiteboard media data through the first video call media channel; and
sending second transmission channel indication information to the peer call terminal, wherein the second transmission channel indication information indicates the peer call terminal to receive the third whiteboard media data through the second video call media channel.

13. The method according to any one of claims 9 to 12, wherein the method further comprises:
stopping transmitting the call video stream through the first video call media transmission channel; and
stopping transmitting the call video stream through the second video call media transmission channel.

14. The method according to any one of claims 9 to 13, wherein the method further comprises:
determining that the call terminal has a resource required for whiteboard interaction.

15. The method according to claim 14, wherein the determining that the call terminal has a resource required for whiteboard interaction comprises:
sending a session initiation protocol SIP message to the call terminal, wherein the SIP message comprises a touch operation determining identifier, and the touch operation determining identifier is used to determine whether the call terminal has the resource required for whiteboard interaction; and
receiving a response message for the SIP message from the call terminal, wherein the response message comprises a touch operation answer identifier, and the touch operation answer identifier indicates that the call terminal has the resource required for whiteboard interaction.

16. The method according to any one of claims 9 to 15, wherein the method further comprises:
receiving a whiteboard interaction application from the call terminal, wherein the whiteboard interaction application comprises an identifier of the peer call terminal, and the identifier is used to apply for whiteboard interaction with the peer call terminal, to present a whiteboard picture comprising a touch trace of the call terminal and/or a touch trace of the peer call terminal on the call interface of the call terminal and the call interface of the peer call terminal;
sending a whiteboard interaction request to the peer call terminal, wherein the whiteboard interaction request is used to request the peer call terminal to perform whiteboard interaction with the call terminal; and
receiving a response message for the whiteboard interaction request from the peer call terminal, wherein the response message indicates that the second user agrees to perform whiteboard interaction with the first user.

17. A call terminal, comprising a processing module, a generation module, a sending module, and a receiving module, wherein
the processing module is configured to: establish a video call media transmission channel to a media server, and control the sending module or the receiving module to transmit a call video stream between the call terminal and a peer call terminal through the video call media transmission channel, to implement a video call service between the call terminal and the peer call terminal; and present a first whiteboard picture on a call interface based on first whiteboard media data, wherein the first whiteboard picture is a blank picture;
the generation module is configured to: detect a first touch operation of a first user on the first whiteboard picture, and generate first touch trace data, wherein the first touch trace data is used to describe a first touch trace generated by the first touch operation;
the sending module is configured to send the first touch trace data to the media server;
the receiving module is configured to receive second whiteboard media data from the media server through the video call media transmission channel; and
the processing module is further configured to present a second whiteboard picture on the call interface based on the second whiteboard media data, wherein the second whiteboard picture comprises the first touch trace and a second touch trace, and the second touch trace is a touch trace generated by performing, by a second user, a second touch operation on a whiteboard picture that is presented on a call interface of the peer call terminal and that corresponds to the first whiteboard picture.

18. The call terminal according to claim 17, wherein
the first whiteboard media data comprises data corresponding to a first video frame, wherein the first video frame is received from the media server through the video call media transmission channel and is used to present the blank picture; and
the processing module is specifically configured to decode the data corresponding to the first video frame to present the first whiteboard picture on the call interface; or
the first whiteboard media data comprises data corresponding to a whiteboard image, and the whiteboard image is locally stored in the call terminal and is used to present the blank picture; and
the processing module is specifically configured to decode the data corresponding to the whiteboard image to present the first whiteboard picture on the call interface.

19. The call terminal according to claim 17 or 18, wherein
the second whiteboard media data comprises data corresponding to a second video frame, and the second video frame is used to present a second whiteboard picture into which the first touch trace and the second touch trace are embedded; and
the processing module is specifically configured to decode the data corresponding to the second video frame to present the second whiteboard picture on the call interface; or
the second whiteboard media data is second touch trace data, and the second touch trace data is used to describe the second touch trace; and
the processing module is specifically configured to present the first touch trace and the second touch trace on the call interface in a superimposition manner based on the first touch trace data and the second touch trace data, to form the second whiteboard picture.

20. The call terminal according to any one of claims 17 to 19, wherein
the receiving module is further configured to receive transmission channel indication information from the media server, wherein the transmission channel indication information indicates the call terminal to receive the second whiteboard media data through the video call media transmission channel.

21. The call terminal according to any one of claims 17 to 20, wherein
the processing module is further configured to control the call terminal to stop transmitting the call video stream through the video call media transmission channel.

22. The call terminal according to any one of claims 17 to 21, wherein
the sending module is further configured to send a whiteboard interaction application to the media server, wherein the whiteboard interaction application comprises an identifier of the peer call terminal, and the identifier is used to apply for whiteboard interaction with the peer call terminal, to present the second whiteboard picture on the call terminal.

23. The call terminal according to any one of claims 17 to 22, wherein
the receiving module is further configured to receive a session initiation protocol SIP message from the media server, wherein the SIP message comprises a touch operation determining identifier, and the touch operation determining identifier is used to determine whether the call terminal has a resource required for whiteboard interaction; and
the sending module is further configured to send a response message for the SIP message to the media server, wherein the response message comprises a touch operation answer identifier, and the touch operation answer identifier indicates that the call terminal has the resource required for whiteboard interaction.

24. A media server, comprising a processing module, a receiving module, and a sending module, wherein
the processing module is configured to: establish a first video call media transmission channel and a second video call media transmission channel, wherein the first video call media transmission channel is a video call media transmission channel between a call terminal and the media server, and the second video call media transmission channel is a video call media transmission channel between the media server and a peer call terminal; and transmit a call video stream between the call terminal and the peer call terminal through the first video call media transmission channel and the second video call media transmission channel, to implement a video call service between the call terminal and the peer call terminal;
the receiving module is configured to: receive first touch trace data from the call terminal, wherein the first touch trace data is data generated by performing, by a first user, a first touch operation on a first whiteboard picture presented on a call interface of the call terminal, the first whiteboard picture is a blank picture, the first whiteboard picture is a whiteboard picture presented based on first whiteboard media data, and the first touch trace data is used to describe a first touch trace generated by the first touch operation; and receive second touch trace data from the peer call terminal, wherein the second touch trace data is data generated by performing, by a second user, a second touch operation on a whiteboard picture that is presented on a call interface of the peer call terminal and that corresponds to the first whiteboard picture, and the second touch trace data is used to describe a second touch trace generated by the second touch operation; and
the sending module is configured to send second whiteboard media data to the call terminal through the first video call media transmission channel, to present a second whiteboard picture on the call interface of the call terminal, wherein the second whiteboard picture comprises the first touch trace and the second touch trace; and send third whiteboard media data to the peer call terminal through the second video call media transmission channel, to present the second whiteboard picture on the call interface of the peer call terminal.

25. The media server according to claim 24, wherein
the first whiteboard media data comprises data corresponding to a first video frame, wherein the first video frame is received from the media server through the first video call media transmission channel and is used to present the blank picture; or
the first whiteboard media data comprises data corresponding to a whiteboard image, and the whiteboard image is locally stored in the call terminal and is used to present the blank picture.

26. The media server according to claim 24 or 25, wherein
the second whiteboard media data is the same as the third whiteboard media data, the second whiteboard media data or the third whiteboard media data comprises data corresponding to a second video frame, and the second video frame is used to present a second whiteboard picture into which the first touch trace and the second touch trace are embedded; or
the second whiteboard media data is different from the third whiteboard media data, the second whiteboard media data is the second touch trace data, and the third whiteboard media data is the first touch trace data.

27. The media server according to any one of claims 24 to 26, wherein
the sending module is further configured to: send first transmission channel indication information to the call terminal, wherein the first transmission channel indication information indicates the call terminal to receive the second whiteboard media data through the first video call media channel; and send second transmission channel indication information to the peer call terminal, wherein the second transmission channel indication information indicates the peer call terminal to receive the third whiteboard media data through the second video call media channel.

28. The media server according to any one of claims 24 to 27, wherein
the processing module is further configured to control the media server to stop transmitting the call video stream through the first video call media transmission channel; and control the media server to stop transmitting the call video stream through the second video call media transmission channel.

29. The media server according to any one of claims 24 to 28, wherein
the sending module is further configured to send a session initiation protocol SIP message to the call terminal, wherein the SIP message comprises a touch operation determining identifier, and the touch operation determining identifier is used to determine whether the call terminal has a resource required for whiteboard interaction; and
the receiving module is further configured to receive a response message for the SIP message from the call terminal, wherein the response message comprises a touch operation answer identifier, and the touch operation answer identifier indicates that the call terminal has the resource required for whiteboard interaction.

30. The media server according to any one of claims 24 to 29, wherein
the receiving module is further configured to receive a whiteboard interaction application from the call terminal, wherein the whiteboard interaction application comprises an identifier of the peer call terminal, and the identifier is used to apply for whiteboard interaction with the peer call terminal, to present a whiteboard picture comprising a touch trace of the call terminal and/or a touch trace of the peer call terminal on the call interface of the call terminal and the call interface of the peer call terminal;
the sending module is further configured to send a whiteboard interaction request to the peer call terminal, wherein the whiteboard interaction request is used to request the peer call terminal to perform whiteboard interaction with the call terminal; and
the receiving module is further configured to receive a response message for the whiteboard interaction request from the peer call terminal, wherein the response message indicates that the second user agrees to perform whiteboard interaction with the first user.

31. A call terminal, comprising a memory and at least one processor connected to the memory, wherein the memory is configured to store computer program code, and the computer program code comprises computer instructions; and when the computer instructions are executed by the at least one processor, the call terminal is enabled to perform the method according to any one of claims 1 to 8.

32. A media server, comprising a memory and at least one processor connected to the memory, wherein the memory is configured to store computer program code, and the computer program code comprises computer instructions; and when the computer instructions are executed by the at least one processor, the media server is enabled to perform the method according to any one of claims 9 to 16.

33. A computer-readable storage medium, comprising computer instructions, wherein when the computer instructions are run on a call terminal, the call terminal is enabled to perform the method according to any one of claims 1 to 8.

34. A computer-readable storage medium, comprising computer instructions, wherein when the computer instructions are run on a server, the server is enabled to perform the method according to any one of claims 9 to 16.

35. A communication system, comprising a call terminal and a media server, wherein the call terminal performs the method according to any one of claims 1 to 8, and the media server performs the method according to any one of claims 9 to 16.
